# EUROPEAN PATENT SPECIFICATION

(11) **EP 3 243 747 B1**
(45) Date of publication and mention of the grant of the patent: **10.07.2019**
(21) Application number: 17170907.4
(22) Date of filing: 12.05.2017
(51) Int. Cl.: B64C 29/02, B64C 39/06, B64C 39/02, B64D 35/00, B64C 11/28, B64C 17/08, B64C 11/10

(54) **VERTICAL TAKE OFF AND LANDING CLOSED WING AIRCRAFT**
VERTIKAL STARTENDES UND LANDENDES FLUGZEUG MIT GESCHLOSSENEN FLÜGELN
DÉCOLLAGE ET ATTERRISSAGE VERTICAL D'UN AÉRONEF À VOILURE FERMÉE

(30) Priority: 13.05.2016 US 201662336363 P; 13.05.2016 US 201662336465 P
(43) Date of publication of application: 15.11.2017
(73) Proprietor: Bell Helicopter Textron Inc., Fort Worth, TX 76101 (US)
(72) Inventor: FENNY, Carlos Alexander, Fort Worth, TX Texas 76112 (US); OLSON, Rohn Lee, Hurst, TX Texas 76054 (US); ZAHASKY, Andrew James, North Richland Hills, TX Texas 76180 (US)
(74) Representative: Barker Brettell LLP

(56) References cited:
- WO-A1-2015/102425
- WO-A1-2016/068784
- WO-A2-2015/143093
- JP-A- 2014 240 242
- US-A- 3 000 593
- US-A- 3 350 035
- US-A1- 2006 108 477
- US-A1- 2010 072 325
- US-A1- 2011 042 509
- GORUNEY T ET AL: "Flow past a delta wing with a sinusoidal leading edge: near-surface topology and flow structure", EXPERIMENTS IN FLUIDS ; EXPERIMENTAL METHODS AND THEIR APPLICATIONS TO FLUID FLOW, SPRINGER, BERLIN, DE, vol. 47, no. 2, 10 May 2009 (2009-05-10), pages 321-331, XP019739243, ISSN: 1432-1114, DOI: 10.1007/S00348-009-0666-X

## Description

### CROSS-REFERENCE TO RELATED APPLICATIONS

This application claims priority to U.S. Provisional Application Serial No. 62/336,363 filed May 13, 2016.

### TECHNICAL FIELD OF THE INVENTION

The present invention relates in general to the field of aircraft design, and more particularly, to vertical take off and landing closed wing aircraft.

### BACKGROUND OF THE INVENTION

Without limiting the scope of the invention, its background is described in connection with aircraft. With the popularity of unmanned drones, there has been resurgence in the use of "tail sitter" or "pogo" configurations. These configurations are generally very stable, but lack the long range and high speed of traditional aircraft. As a result, there is a need for an aircraft that can transition between vertical hover and horizontal airplane mode flight. In addition, these configurations carry payload only within a center of the distributed airframe or suspended beneath the aircraft. Moreover, these aircraft are generally single purpose designs. As a result, there is a need for a distributed airframe aircraft having modular fuselage sections.

US 3350035 discloses a VTOL aircraft comprising a closed continuous wing of annular shape, at least one fuselage secured to the wing, at least one power source secured to the wing, a plurality of controllable pitch rotors located to the rear of the wing, transmission means to distribute the power to the plurality of rotors, and landing gear attached to the leading edge of the wing arranged around its periphery.

JP 2014240242 discloses a VTOL aircraft, comprising a plurality of inner rotor units arranged on a first circumference separated from the center of an airframe by a predetermined distance; a plurality of outer rotor units arranged on a second circumference separated from the center of the airframe by a predetermined distance larger than the predetermined distance; and control means for drivingly controlling the inner rotor units and the outer rotor units. Flotation of the air frame is performed by operating mainly the inner rotor units and attitude control of the airframe is performed by operating mainly the outer rotor units.

WO 2016/068784 discloses a multi-rotor aerial vehicle comprising, at least a first, second and third rotor, each rotatable by a dedicated first second and third hydraulic motor a power unit, at least a first, second and third hydraulic pump dedicated to the respective first, second and third hydraulic motor wherein each hydraulic pump is arranged to provide pressurized fluid to each hydraulic motor for powering the hydraulic motor and thereby rotating the respective rotor a control unit for controlling the operation of the multi-rotor aerial vehicle, wherein the control of the multi-rotor aerial vehicle is performed by altering the flow of pressurized fluid distributed to each respective hydraulic motor, wherein the flow of pressurized fluid provided to each hydraulic motor is individually controllable by means of at least one control valve configured to control the flow of pressurized fluid from each hydraulic pump to its dedicated hydraulic motor.

US 2010/072325 discloses a VTOL aircraft with rotors mounted on wing-tip pods which can be tilted from the vertical to the horizontal aft position. The rotors are then stopped in the axial-flow condition and indexed to an azimuth position, aft of the wing trailing-edge. Rotor blades are then folded forward (blade-tips upstream of rotor-hubs) and locked into grooves in the tip-pods. The main feature of the autorotative aft rotor tilt is that a soft-inplane rotor can be used, which reduces rotor weight. The blade-folding axis is also the blade-flapping axis.

WO2015/143093 describes an aerial vehicle adapted for vertical takeoff and landing using a set of wing mounted thrust producing elements and a set of tail mounted rotors for takeoff and landing. An aerial vehicle which is adapted to vertical takeoff with the rotors in a rotated, take-off attitude then transitions to a horizontal flight path, with the rotors rotated to a typical horizontal configuration. The aerial vehicle uses different configurations of its wing mounted rotors and propellers to reduce drag in all flight modes.

US3000593 describes a composite flying machine comprising a carrier aircraft and a carried craft detachably secured thereto. The carrier aircraft comprises an annular aerofoil, slide-ways extending substantially along generatrices of the inner surface of said annular aerofoil in a fore-and-aft direction, said slide-ways being adapted to slidably engage and support rim portions of said carried craft, whereby the latter is at least partially accommodated within said annular aerofoil. A power plant and cabin are arranged peripherally with respect to said annular aerofoil whereby the inner space thereof is left free and available for housing said carried craft.

### SUMMARY OF THE INVENTION

An aircraft capable of vertical takeoff and landing, stationary flight and forward flight is set out in claim 1.

Also described herein is an aircraft capable of vertical takeoff and landing, and stationary and horizontal flight that includes a distributed airframe and a modular fuselage coupled to the distributed airframe. The modular fuselage has a longitudinal axis substantially parallel to a rotational axis of three or more propellers. The modular fuselage includes a rear module substantially disposed within a perimeter of the distributed airframe, a front module removably connected to the rear module and substantially aligned with the longitudinal axis. One or more engines or motors are disposed within or attached to the distributed airframe or fuselage. The three or more propellers are proximate to a leading edge of the distributed airframe, distributed along the distributed airframe, and operably connected to the one or more engines or motors to provide lift whenever the aircraft is in vertical takeoff and landing and stationary flight.

### BRIEF DESCRIPTION OF THE DRAWINGS

The novel features believed characteristic of the present application are set forth in the appended claims. However, the system itself, as well as a preferred mode of use, and further objectives and advantages thereof, will best be understood by reference to the following detailed description when read in conjunction with the accompanying drawings, in which the leftmost significant digit(s) in the reference numerals denote(s) the first figure in which the respective reference numerals appear, wherein:
FIG. 1A is a perspective view of a closed wing aircraft in accordance with one embodiment of the present invention;
FIG. 1B is a front elevation view of the closed wing aircraft of FIG. 1A;
FIG. 1C is a rear elevation view of the closed wing aircraft of FIG. 1A;
FIG. 1D is a right side elevation view of the closed wing aircraft of FIG. 1A;
FIG. 1E is a left side elevation view of the closed wing aircraft of FIG. 1A;
FIG. 1F is a top plan view of the closed wing aircraft of FIG. 1A;
FIG. 1G is a bottom plan view of the closed wing aircraft of FIG. 1A;
FIG. 2 shows a schematic of a hybrid turboshaft engine hydraulic distributed propulsion system in accordance with one embodiment of the present invention;
FIG. 3 shows a schematic of a hybrid internal combustion engine - engine hydraulic distributed propulsion system in accordance with one embodiment of the present invention;
FIG. 4 shows a schematic of a hybrid electric hydraulic distributed propulsion system in accordance with one embodiment of the present invention;
FIG. 5 shows a schematic of a hybrid electric hydraulic with a piezo-electric pump distributed propulsion system in accordance with one embodiment of the present invention;
FIG. 6A depicts the closed wing aircraft of FIG. 1A in stationary flight (hover mode including vertical take off and landing) in accordance with one embodiment of the present invention;
FIG. 6B depicts the closed wing aircraft of FIG. 1A in transition from stationary flight to forward flight and vice versa in accordance with one embodiment of the present invention;
FIG. 6C depicts the closed wing aircraft of FIG. 1A in forward flight in accordance with one embodiment of the present invention
FIG. 7A is a perspective view of a closed wing aircraft in accordance with one embodiment of the present invention in which the rotors on the spokes are deployed and the rotors on the closed wing are folded forward;
FIG. 7B is a front elevation view of the closed wing aircraft of FIG. 7A;
FIG. 7C is a rear elevation view of the closed wing aircraft of FIG. 7A;
FIG. 7D is a right side elevation view of the closed wing aircraft of FIG. 7A;
FIG. 7E is a left side elevation view of the closed wing aircraft of FIG. 7A;
FIG. 7F is a top plan view of the closed wing aircraft of FIG. 7A;
FIG. 7G is a bottom plan view of the closed wing aircraft of FIG. 7A;
FIG. 8 is a perspective view of a closed wing aircraft in accordance with one embodiment of the present invention in which the rotors on the spokes are deployed and the rotors on the closed wing are folded backward;
FIG. 9A is a perspective view of a closed wing aircraft having a sinusoidal-shaped circular wing in accordance with one embodiment of the present invention;
FIG. 9B is a front elevation view of the closed wing aircraft of FIG. 9A;
FIG. 9C is a rear elevation view of the closed wing aircraft of FIG. 9A;
FIG. 9D is a right side elevation view of the closed wing aircraft of FIG. 9A;
FIG. 9E is a left side elevation view of the closed wing aircraft of FIG. 9A;
FIG. 9F is a top plan view of the closed wing aircraft of FIG. 9A;
FIG. 9G is a bottom plan view of the closed wing aircraft of FIG. 9A;
FIG. 10 is a side view of a modular fuselage in accordance with one embodiment of the present invention;
FIG. 11 depicts the nose section or module pivoting to an open position in accordance with one embodiment of the present invention;
FIG. 12 depicts the front section or module in a retracted position in accordance with one embodiment of the present invention; and
FIG. 13 depicts the middle section or module in a retracted position in accordance with one embodiment of the present invention.

### DETAILED DESCRIPTION OF THE INVENTION

While the system of the present application is susceptible to various modifications and alternative forms, specific embodiments thereof have been shown by way of example in the drawings and are herein described in detail. It should be understood, however, that the description herein of specific embodiments is not intended to limit the present application to the particular forms disclosed, but on the contrary, the intention is to cover all modifications, equivalents, and alternatives falling within scope of the present application as defined by the appended claims.

To facilitate the understanding of this invention, a number of terms are defined below. Terms defined herein have meanings as commonly understood by a person of ordinary skill in the areas relevant to the present invention. Terms such as "a", "an" and "the" are not intended to refer to only a singular entity, but include the general class of which a specific example may be used for illustration. The terminology herein is used to describe specific embodiments of the invention, but their usage does not delimit the invention, except as outlined in the claims.

Illustrative embodiments of the present application are described below. In the interest of clarity, not all features of an actual implementation are described in this specification. It will of course be appreciated that in the development of any such actual
embodiment, numerous implementation-specific decisions must be made to achieve the developer's specific goals, such as compliance with system-related and business-related constraints, which will vary from one implementation to another. Moreover, it will be appreciated that such a development effort might be complex and time-consuming but would nevertheless be a routine undertaking for those of ordinary skill in the art having the benefit of this disclosure.

As used herein, reference may be made to the spatial relationships between various components and to the spatial orientation of various aspects of components as the devices are depicted in the attached drawings. However, as will be recognized by those skilled in the art after a complete reading of the present application, the devices, members, apparatuses, etc. described herein may be positioned in any desired orientation. Thus, the use of terms such as "above," "below," "upper," "lower," or other like terms to describe a spatial relationship between various components or to describe the spatial orientation of aspects of such components should be understood to describe a relative relationship between the components or a spatial orientation of aspects of such components, respectively, as the device described herein may be oriented in any desired direction.

As will be described in more detail below, various embodiments of the present invention integrate a circular wing or ring wing configuration with a distributed propulsion system to create a vertical takeoff and landing (VTOL) aircraft configuration with long range and high speed. These performance capabilities are achieved without increased aircraft complexity and cost normally incurred with this level of capability in a VTOL aircraft. No reconfiguration of the aircraft is required to transition between vertical hover and horizontal airplane mode flight. The "tail sitter" or "pogo" configuration allows transition without any physical configurations. However, in some embodiments, structural, aerodynamic or power plant adjustments and/or reconfigurations may be desirable. In some embodiments, the rotor blades of the closed wing mounted propellers can be folded either forward or back to further reduce drag and provide increased speed and duration.

The modular fuselage sections described herein are not limited to the closed wing aircraft illustrated in the figures. The present invention is applicable to any vertical takeoff and landing aircraft having a distributed propulsion system in which a fuselage can be supported by the distributed propulsion system and airframe. As a result, the modular fuselage sections are not limited to closed wing aircraft.

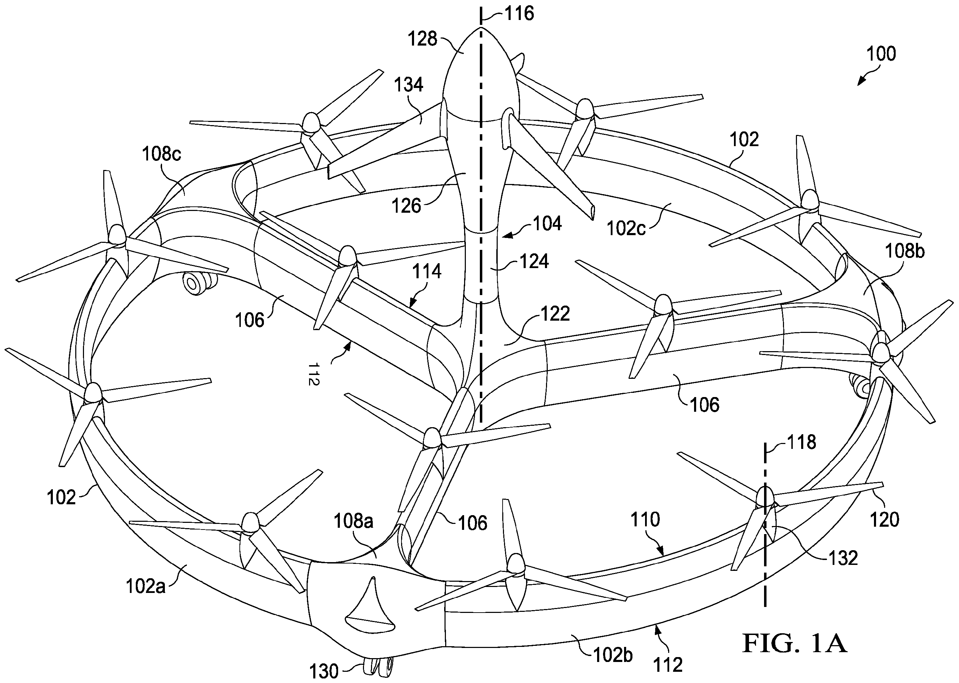

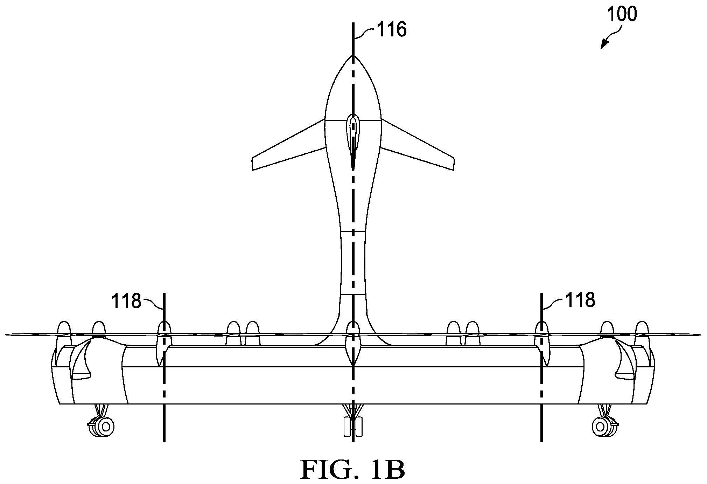

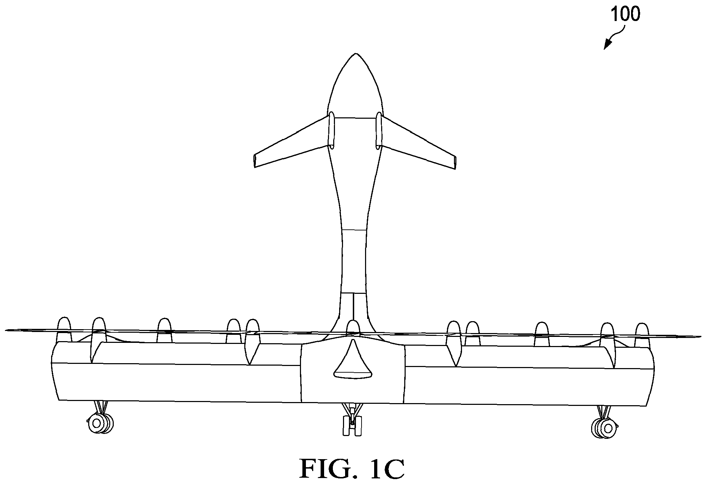

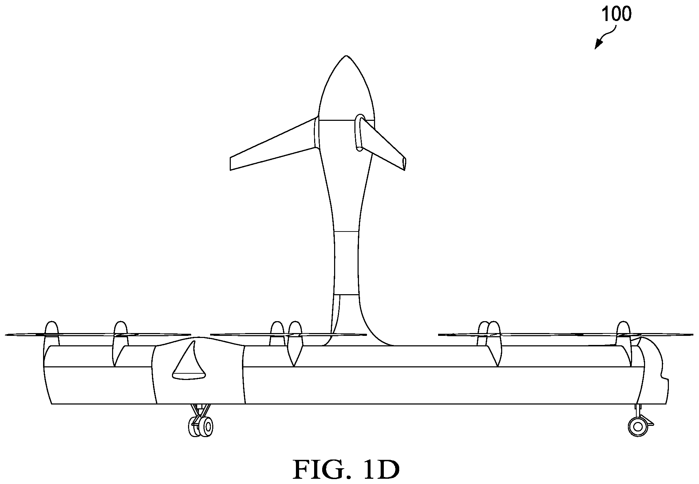

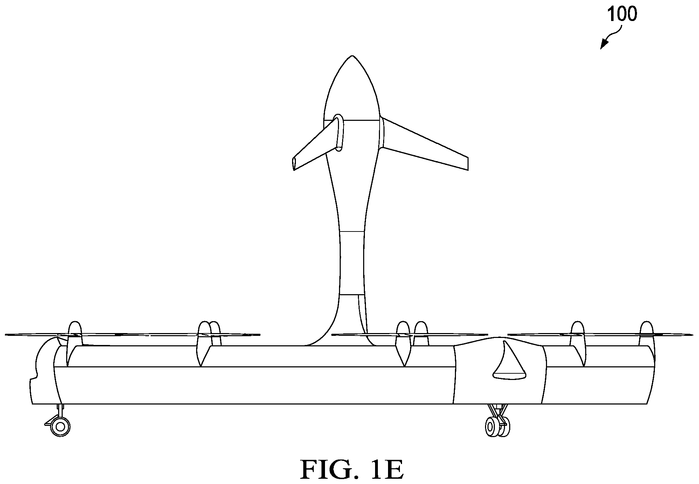

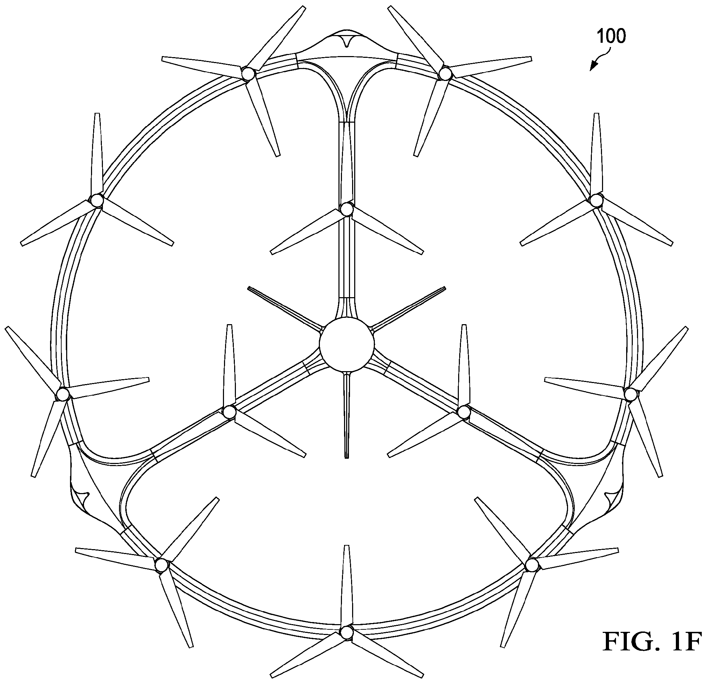

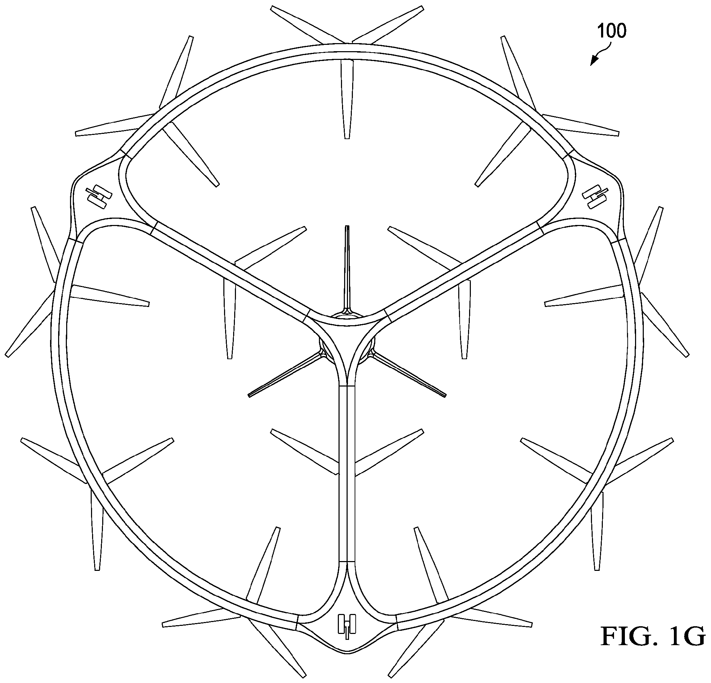

Now referring to FIGS. 1A-1G, various views of a closed wing aircraft 100 in accordance with one embodiment of the present invention are shown. More specifically, FIG. 1A is a perspective view, FIG. 1B is a front elevation view, FIG. 1C is a rear elevation view, FIG. 1D is right side elevation view, FIG. 1E is a left side elevation view, FIG. 1F is a top plan view, and FIG. 1G is a bottom plan view. This closed wing aircraft 100 features the following: 1) Tail sitter configuration provides for conversion to airplane mode without reconfiguration; 2) Circular wing optimizes propulsion, structural, aerodynamic, and center of gravity (CG) requirements; 3) Gearboxes and drive train are completely eliminated; 4) Rotor cyclic and collective controls are replaced by variable speed constant pitch propellers; and 5) Yaw in vertical flight and roll in hover mode are provided by trailing edge surfaces on the spokes connecting the closed wing to the fuselage.

The closed wing aircraft 100 utilizes the ring wing configuration to provide a symmetric matrix distribution of hydraulic motor driven propellers to maximize controllability and provide safety in the event of a hydraulic motor failure. The ring wing also reduces the effects of cross winds during takeoff and landing by minimizing the affected wing area and eliminating induced yaw. In airplane mode flight the ring wing allows the aircraft maintain any roll position in order to position sensors as required. For noise reduction the propellers within the ring provide an acoustic barrier. Structurally, the combination of distributed propulsion and the ring wing minimizes bending moments allowing for lighter and stiffer structure compared with distributed propulsion on straight wings. Engines or fuel/batteries can be housed in the base of the fuselage or at the intersection of the spokes to the ring wing for strength and minimization of weight. Landing gear is positioned at these points for similar reasons.

More specifically, the aircraft 100 can be manned or unmanned and is capable of vertical takeoff and landing, stationary flight and forward flight. The aircraft 100 includes a closed wing 102, a fuselage 104 at least partially disposed within a perimeter of the closed wing 102, and three or more spokes 106 coupling the closed wing 102 to the fuselage 104. The closed wing 102 can be circular-shaped, oval-shaped, triangular-shaped, polygonal-shaped or any other shape suitable for the desired operational and aerodynamic requirements of the aircraft 100. In addition, the closed wing can be made up of a plurality of wing segments 102a, 102b, 102c and wing-spoke intersections or junctions 108a, 108b, 108c connected together. The cross-sectional profile of the closed wing 102 between the leading edge 110 and trailing edge 112 can be a symmetrical airfoil or any desirable aerodynamic shape. The number of the three or more spokes 106 can be determined, in part, by the shape and size of the closed wing 102, and the shape, size and payload of the fuselage 104. The cross-sectional profile of the spokes 106 between the leading edge 114 and the trailing edge 112 can be a symmetrical airfoil or any desirable aerodynamic shape. The closed wing 102, the fuselage 104 and the three or more spokes 106 are preferably symmetrically shaped to provide transition between vertical takeoff and landing, stationary flight and forward flight in any direction. However, non-symmetrical shapes can be used. As a result, the shape of the closed wing 102 and number of spokes 106 shown in the figures is only one example. The closed wing 102 may also include one or more doors or removable sections that provide access to the fuselage 104 when the aircraft 100 is in a landed position.

The fuselage 104 may include one or more sections or modules that have a longitudinal axis 116 substantially parallel to a rotational axis 118 of the propellers 120. The shape and length of the fuselage 104 will vary depending on the desired mission and flight characteristics. As a result, the shape and length of the fuselage 104 shown in the figures is only one example and is not intended to limit the scope of the invention. For example, the fuselage 104 may include a rear section or module 122 substantially disposed at a center of the closed wing 102 that provides a fuselage-spoke intersection or junction, a middle section or module 124 connected to the rear section or module 122, a front section or module 126 connected to the middle module 124, and a nose section or module 128 connected to the front section or module 126. Sections or modules 122, 124, 126, 128 can be removably connected to one another, which makes the aircraft 100 configurable for any desired mission or function. In other words, the closed wing 102 and three or more spokes 106 provide a stable flight platform any desired payload. Moreover, the middle 124, front 126 and nose 128 sections or modules can detach, pivot, or retract at least partially into one or more of the other sections or modules for storage or transport of the aircraft 100. The rear 122, middle 124, front 126 and nose sections or modules 128 can be individually configured to be a cockpit module, a cabin module, an escape module, a payload module, a sensor module, a surveillance module, a power source module, a fuel module, or any combination thereof. Note that the nose section or module 128 may contain one or more parachutes.

The aircraft 100 also includes three or more landing gear, pads or skids 130 operably attached to the closed wing 102. Typically, the landing gear, pads or skids 130 will be
disposed proximate to the wing-spoke intersections or junctions 108a, 108b, 108c where there is more structural support. The landing gear, pads or skids 130 can be retractable.

One or more engines or motors 132 are disposed within or attached to the closed wing 102, fuselage 104 or spokes 106 in a distributed configuration. Three or more propellers 120 are proximate to the leading edge 110 of the closed wing 102 or the leading edge 114 of the spokes 106, distributed along the closed wing 102 or the three or more spokes 106, and operably connected to the one or more engines or motors 132. In the embodiment shown, nine propellers 120 are disposed proximate to the closed wing 102, and one propeller 120 is disposed proximate to each spoke 106. The propellers 120 can be variable speed constant pitch propellers or other type of propeller. The distribution and number of propellers 120 are designed to provide stability during the failure of one or more propellers 120, or engines or motors 132.

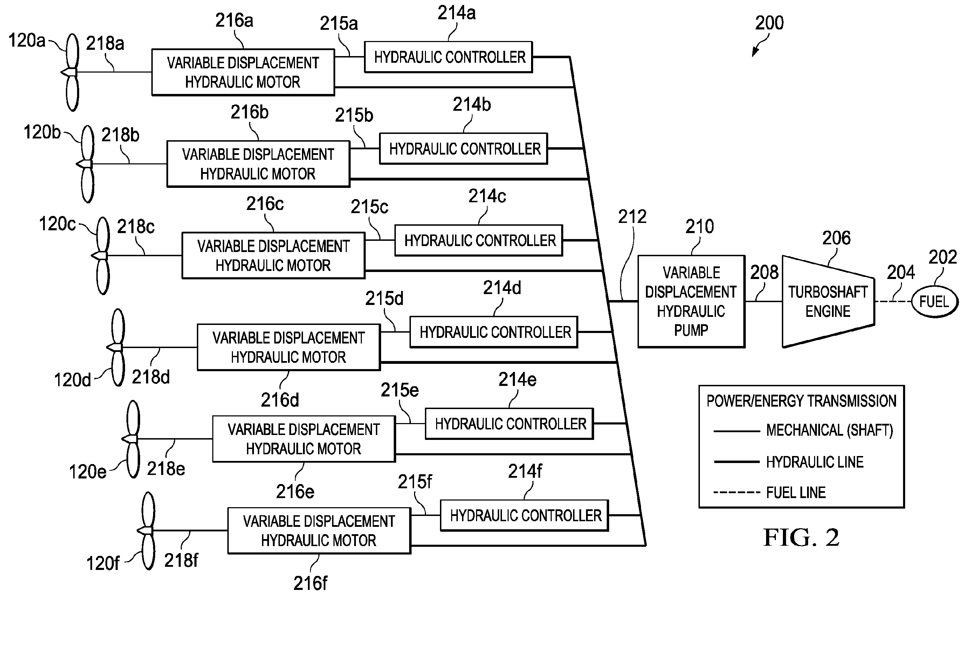

In one embodiment, a source of hydraulic or electric power is disposed within or attached to the closed wing 102, fuselage 104 or spokes 106 and coupled to each of the hydraulic motors 132 disposed within or attached to the closed wing 102, fuselage 104 or spokes 106. The source of hydraulic or electric power provides sufficient energy density for the aircraft to attain and maintain operations of the aircraft 100. The source of hydraulic or electric power can be one or more batteries, a piston engine, or a turboshaft engine. A controller is coupled to each of the hydraulic motors 132, and one or more processors are communicably coupled to each controller that control an operation and speed of the plurality of hydraulic motors 132. Note that a single source of hydraulic or electric power can drive multiple hydraulic motors 132. For example, a source of hydraulic or electric power can be located in the wing-spoke intersections or junctions 108a, 108b, 108c or the rear fuselage 122 where there is more structural support. Hydraulic power distribution systems can be used to transmit the power to the hydraulic motors 132, which in turn drive the propellers 120. The hydraulic motors 132 are selected based on at least one of aerodynamics, propulsive efficiency, structural efficiency, aeroelasticity, or weight of the aircraft. Moreover, the propellers 120, or the motors 132 can be mounted to pivot to provide directional thrust. Similarly, additional thrusters can be disposed on the closed wing 102, fuselage 104 or spokes 106. Various examples of distributed power systems are shown in Figs. 2-5.

Referring now to FIG. 2, a schematic of a hybrid turboshaft engine hydraulic distributed propulsion system 200 in accordance with one embodiment of the present
invention is shown. In the hybrid turboshaft engine hydraulic distributed propulsion system 200, a source of fuel 202 is connected to a fuel line 204 that feeds a turboshaft engine 206 that generates a mechanical force that is transmitted by a mechanical shaft 208 that is connected to a variable displacement hydraulic pump 210. The variable displacement hydraulic pump 210 is connected to, and provides hydraulic power to, hydraulic lines 212. The hydraulic fluid in hydraulic lines 212 is connected to hydraulic controllers 214a-f, which are connected mechanically by mechanical shafts 215a-f to the variable displacement hydraulic motors 216a-f, respectively, each of which is depicted being connected by mechanical shafts 218a-f to propellers 120a-f, respectively. Changing the displacement of the variable displacement hydraulic motors 216a-f can control the speed and torque of the variable displacement hydraulic motors 216a-f. The variable displacement hydraulic motors 216a-f can be self-cooling. This schematic shows the Hybrid Turboshaft Engine Hydraulic distributed propulsion system 200 as having six (6) hydraulic controllers 214a-f, and six (6) variable displacement hydraulic motors 216a-f. However, the skilled artisan will recognize that the present invention can include a smaller or larger number of variable displacement hydraulic motors and propellers, for example 4, 5, 6, 7, 8, 9, 10, 11, 12, 13, 14, 15, 16, 17, 18, 19, 20, 21, 22, 23, 24, 25 or more. In this embodiment, the fuel is converted into mechanical power/energy via the turboshaft engine 206, which provides the hydraulic power that drives the variable displacement hydraulic motors 216a-f and therefore the propellers 120a-f.

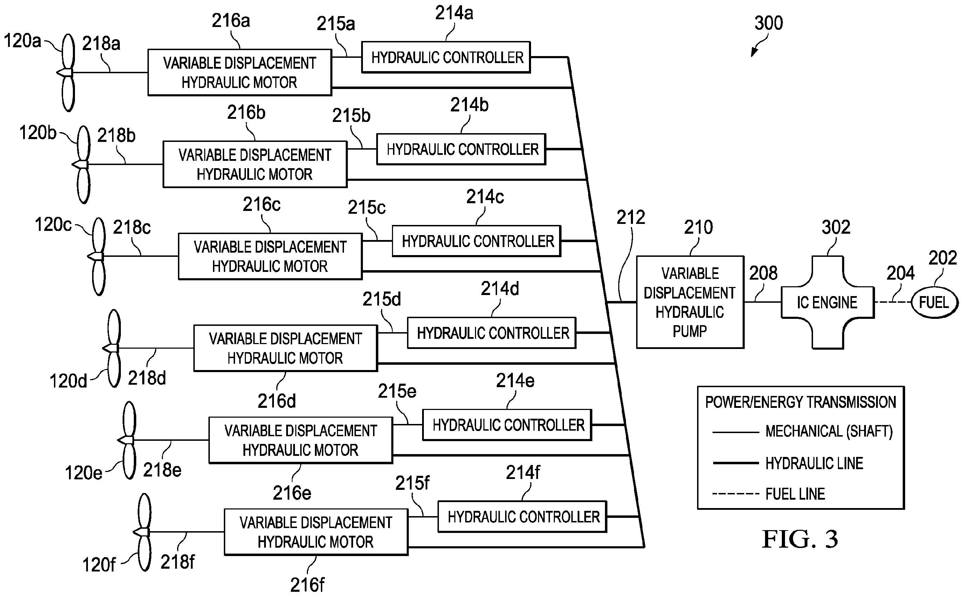

Now referring to FIG. 3, a schematic of a hybrid internal combustion engine - engine hydraulic distributed propulsion system 300 in accordance with one embodiment of the present invention is shown. In this embodiment, the hybrid internal combustion engine - engine hydraulic distributed propulsion system 300 uses a source of fuel 202 that is connected to fuel line 204 that feeds an internal combustion engine 302 that generates a mechanical force that is transmitted by a mechanical shaft 208 that is connected to a variable displacement hydraulic pump 210. The variable displacement hydraulic pump 210 is connected to, and provides hydraulic power to, hydraulic lines 212. The hydraulic fluid in hydraulic lines 212 is connected to hydraulic controllers 214a-f, which are connected mechanically by mechanical shafts 215a-f to the variable displacement hydraulic motors 216a-f, respectively, each of which is depicted being connected by mechanical shafts 218a-f to propellers 120a-f, respectively. Changing the displacement of the variable displacement hydraulic motors 216a-f can control the speed and torque of the variable displacement hydraulic motors 216a-f. The variable displacement hydraulic motors 216a-f can be self-cooling. This schematic shows the Hybrid Internal Combustion Engine - Engine Hydraulic distributed propulsion system 300 as having six (6) hydraulic controllers 214a-f, and six (6) variable displacement hydraulic motors 216a-f. However, the skilled artisan will recognize that the present invention can include a smaller or larger number of variable displacement hydraulic motors and propellers, for example 4, 5, 6, 7, 8, 9, 10, 11, 12, 13, 14, 15, 16, 17, 18, 19, 20, 21, 22, 23, 24, 25 or more. In this embodiment, the fuel is converted into mechanical power/energy via the internal combustion engine 302, which provides the hydraulic power that drives the variable displacement hydraulic motors 216a-f and therefore the propellers 120a-f.

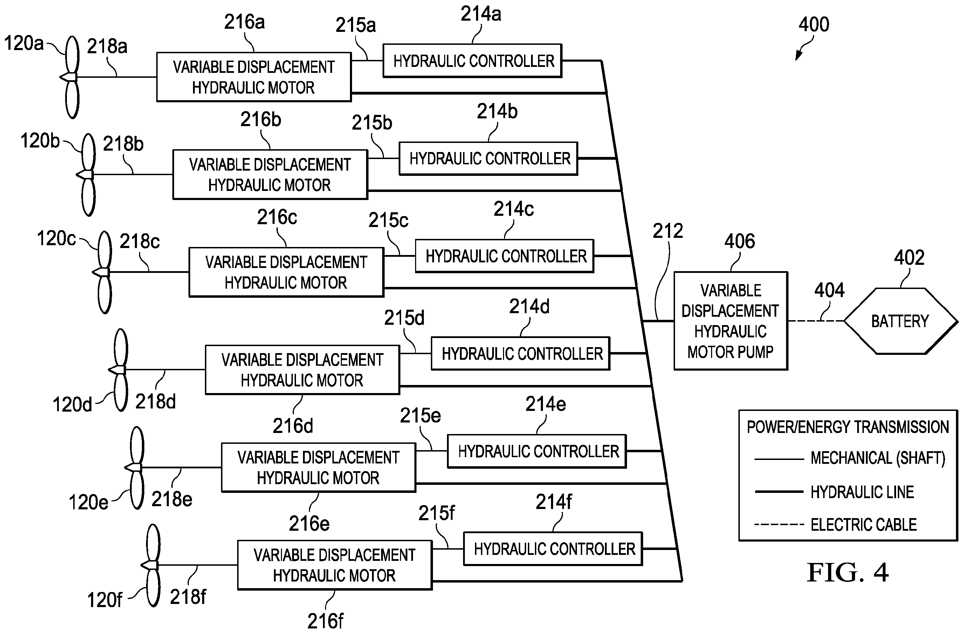

Referring now to FIG. 4, a schematic of a hydraulic distributed propulsion system 400 in accordance with one embodiment of the present invention is shown. In this embodiment, the hydraulic distributed propulsion system 400 uses one or more batteries 402 that are connected to electrical cable 404 that directly powers a variable displacement hydraulic motor pump 406. The variable displacement hydraulic motor pump 406 is connected to, and provides hydraulic power to, hydraulic lines 212. The hydraulic fluid in hydraulic lines 212 is connected to hydraulic controllers 214a-f, which are connected mechanically by mechanical shafts 215a-f to the variable displacement hydraulic motors 216a-f, respectively, each of which is depicted being connected by mechanical shafts 218a-f to propellers 120a-f, respectively. Changing the displacement of the variable displacement hydraulic motors 216a-f can control the speed and torque of the variable displacement hydraulic motors 216a-f. The variable displacement hydraulic motors 216a-f can be self-cooling. This schematic shows the Hybrid Internal Combustion Engine - Engine Hydraulic distributed propulsion system 400 as having six (6) hydraulic controllers 214a-f, and six (6) variable displacement hydraulic motors 216a-f. However, the skilled artisan will recognize that the present invention can include a smaller or larger number of variable displacement hydraulic motors and propellers, for example 4, 5, 6, 7, 8, 9, 10, 11, 12, 13, 14, 15, 16, 17, 18, 19, 20, 21, 22, 23, 24, 25 or more. In this embodiment, the electrical power is converted into mechanical power/energy via the variable displacement hydraulic motor pump 406, which provides the hydraulic power that drives the variable displacement hydraulic motors 216a-f and therefore the propellers 120a-f.

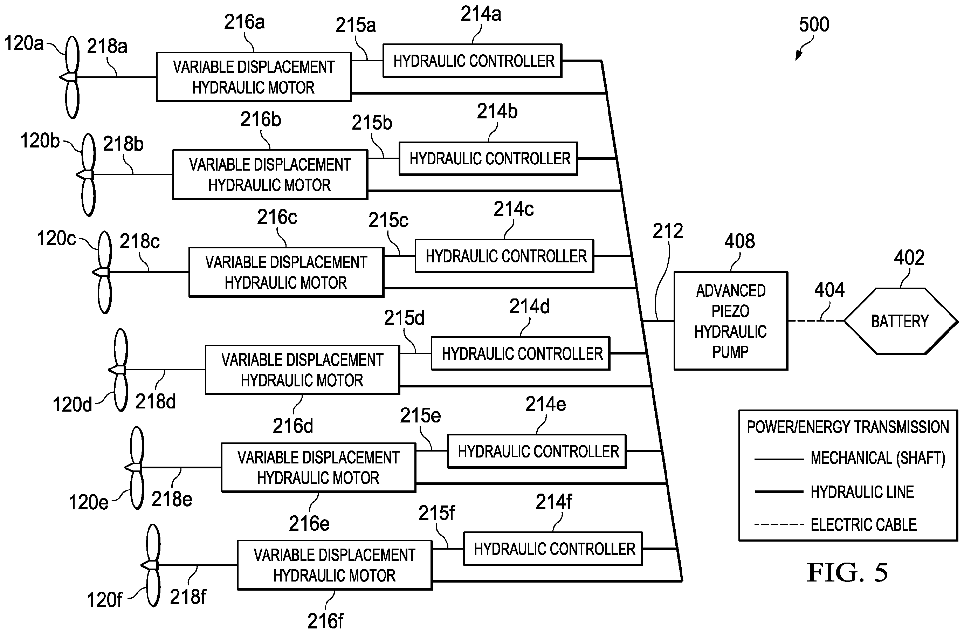

Now referring to FIG. 5, a schematic of a hybrid electric hydraulic with a piezo-electric pump distributed propulsion system 500 in accordance with one embodiment of the present invention is shown. In this embodiment, the hybrid electric hydraulic with a piezo-electric pump distributed propulsion system 500 uses one or more batteries 402 that are connected to electrical cable 404 that directly powers a piezo-hydraulic pump 408. The piezo-hydraulic pump 408 is connected to, and provides hydraulic power to, hydraulic lines 212. The hydraulic fluid in hydraulic lines 212 is connected to hydraulic controllers 214a-f, which are connected mechanically by mechanical shafts 215a-f to the variable displacement hydraulic motors 216a-f, respectively, each of which is depicted being connected by mechanical shafts 218a-f to propellers 120a-f, respectively. Changing the displacement of the variable displacement hydraulic motors 216a-f can control the speed and torque of the variable displacement hydraulic motors 216a-f. The variable displacement hydraulic motors 216a-f can be self-cooling. This schematic shows the Hybrid Internal Combustion Engine - Engine Hydraulic distributed propulsion system 500 as having six (6) hydraulic controllers 214a-f, and six (6) variable displacement hydraulic motors 216a-f. However, the skilled artisan will recognize that the present invention can include a smaller or larger number of variable displacement hydraulic motors and propellers, for example 4, 5, 6, 7, 8, 9, 10, 11, 12, 13, 14, 15, 16, 17, 18, 19, 20, 21, 22, 23, 24, 25 or more. In this embodiment, the electrical power is converted into mechanical power/energy via the piezo-hydraulic pump 408, which provides the hydraulic power that drives the variable displacement hydraulic motors 216a-f and therefore the propellers 120a-f.

Some of the benefits of the distributed hydraulic system of the present invention, in conjunction with electric propulsion, can be attained by the present invention, for aircraft of all sizes. For example, for use with Vertical Take-Off and Landing (VTOL) aircraft the advantages of the present invention include: (1) a reduction in aircraft propulsion installation weight through greater structural integration; (2) the elimination of (rotor cyclic) control through differential and vectoring thrust for pitch, roll, and yaw moments; (3) high production rates and easy replacement of motors or propulsors that are small and light; (4) in the case of turbine/IC engine electric power generation, reduced fuel consumption and emissions through independent control of engine and rotor speeds; and (5) using electric batteries provided for more efficient energy usage, reduced emissions, and lower noise.

Further advantages of the present invention include addressing certain road blocks to distributed electric propulsion for larger VTOL aircraft. The present invention provides larger rotors; (3) with increased power, electric motors require large diameters with ducted air or liquid cooling to prevent over heating (increased weight/envelope/complexity); (4) with increased power electric motor bearings require active lubrication (increased weight/complexity); and (5) current battery technology energy density insufficient for practical applications due to excessive weight.

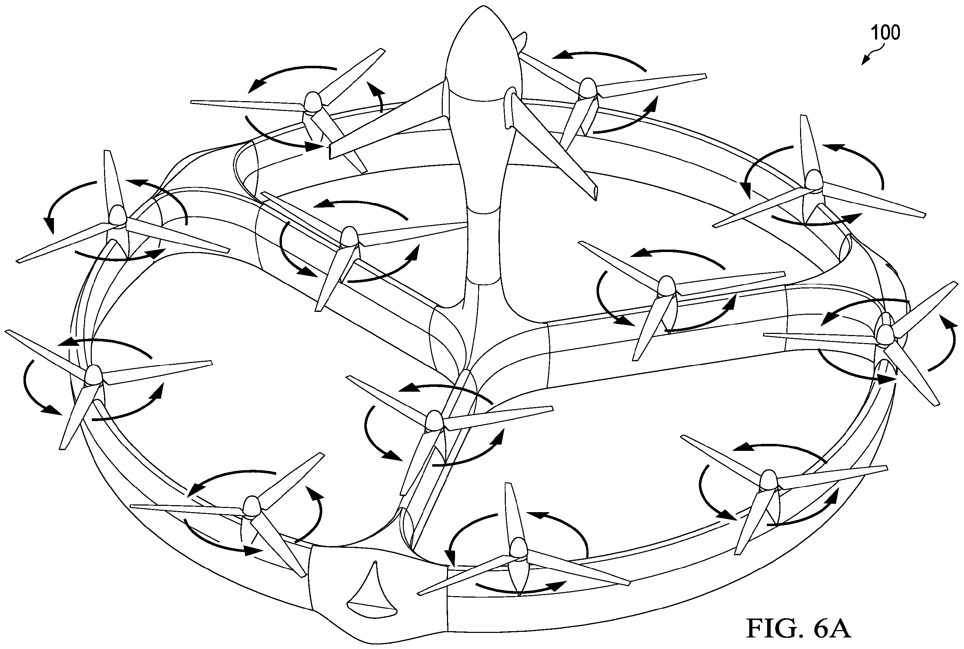

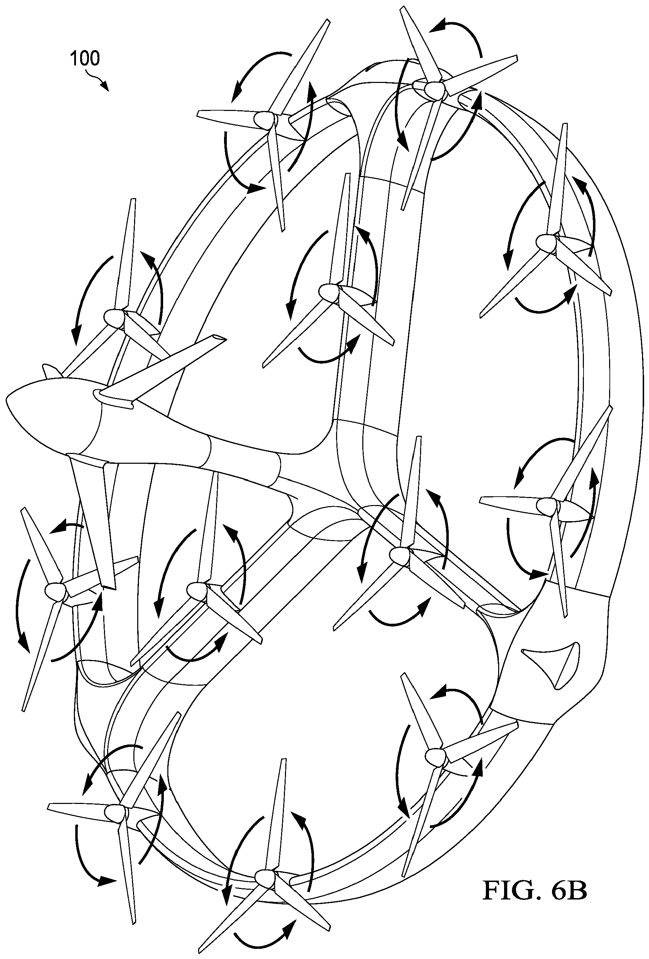

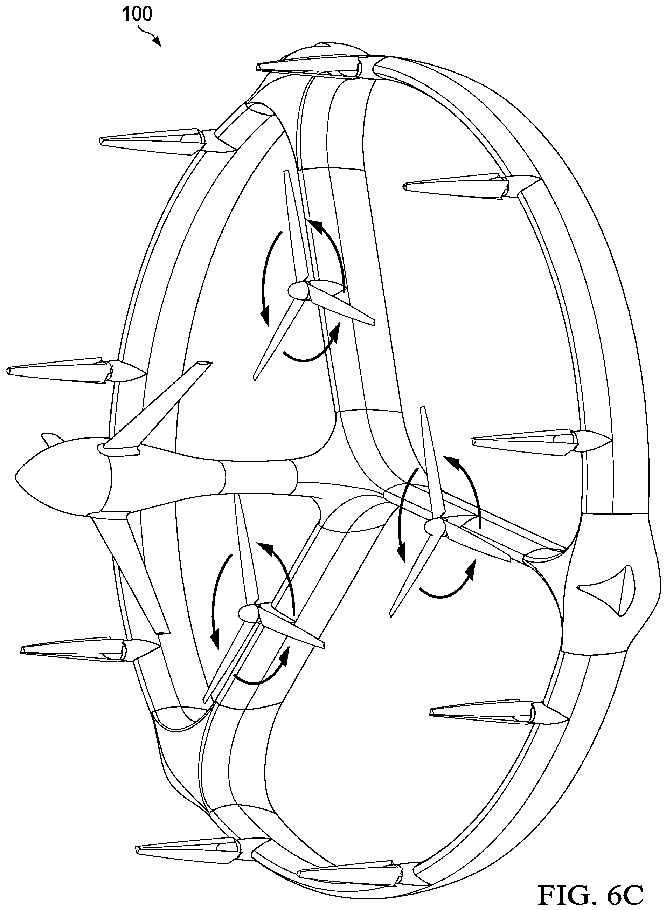

Referring now to FIGS. 6A-6C, the aircraft 100 is shown in stationary flight (hover mode including vertical take off and landing) (FIG. 6A), transition from stationary flight to forward flight and vice versa (FIG. 6B), and forward flight (FIG. 6C). The closed wing 102 provides lift whenever the aircraft 100 is in forward flight. The three or more propellers 120 provide lift whenever the aircraft 100 is in vertical takeoff and landing and stationary flight, and provide thrust whenever the aircraft 100 is in forward flight. During forward flight, the propellers 120 can be selectively feathered or operated in a low power mode because the closed wing 102 and spokes 106 provide lift. One or more flight control surfaces are disposed on or extending from the closed wing 102, spokes 106 or the fuselage 104 to provide improved control and flight characteristics. The one or more control surfaces may include one or more air foils, winglets, elevators or ailerons. For example and as shown in FIGS. 1A-1G, winglets 134 mounted on the forward section or module 126 of the fuselage 104. Note that the one or more airfoils or winglets can be retractable, removable, stowable or variable swept.

As shown, the closed wing 102, fuselage 104 and spokes 106 are not substantially reconfigured for transition between vertical takeoff and landing, stationary flight and forward flight. However , in some examples not being part of the current invention, it may be desirable to have the three or more spokes 106 operable to change a position of the closed wing 102 with respect to the fuselage 104 or vice versa. In other words, the spokes 106 would selectively pivot the closed wing 102 to act like a giant flap in horizontal mode and/or assist in transition to/from vertical mode.

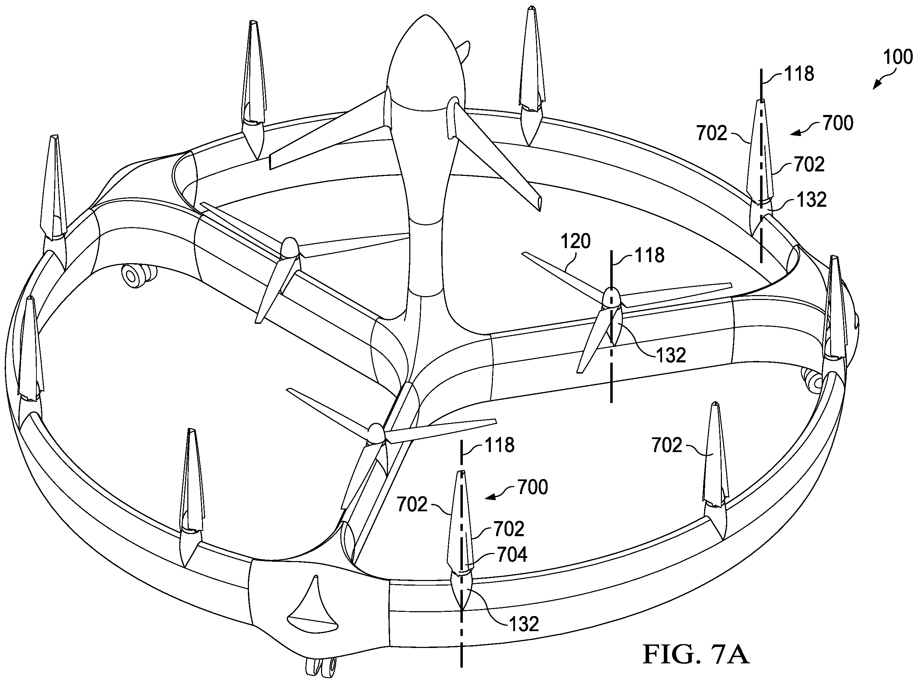

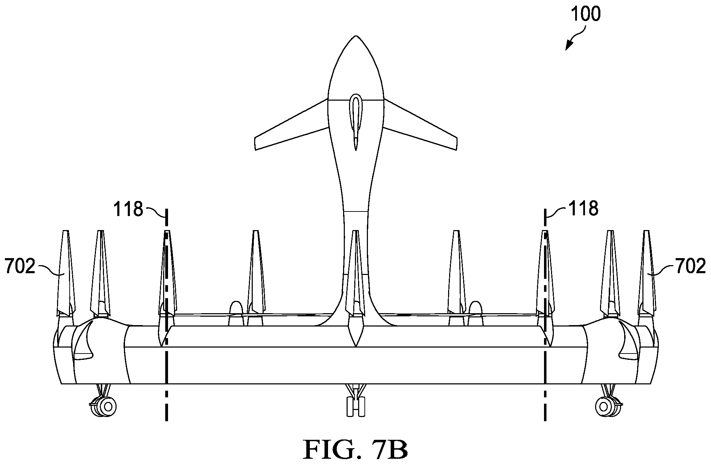

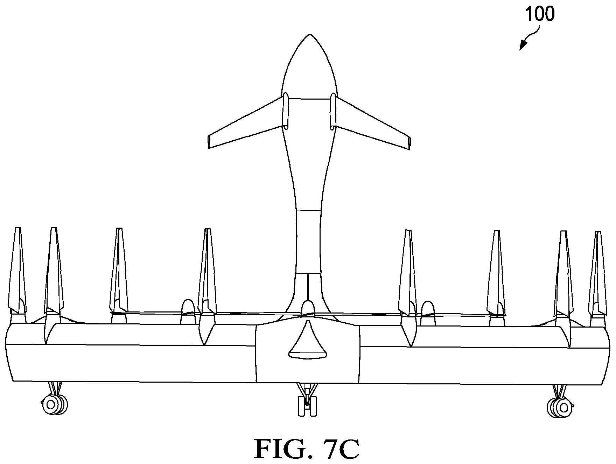

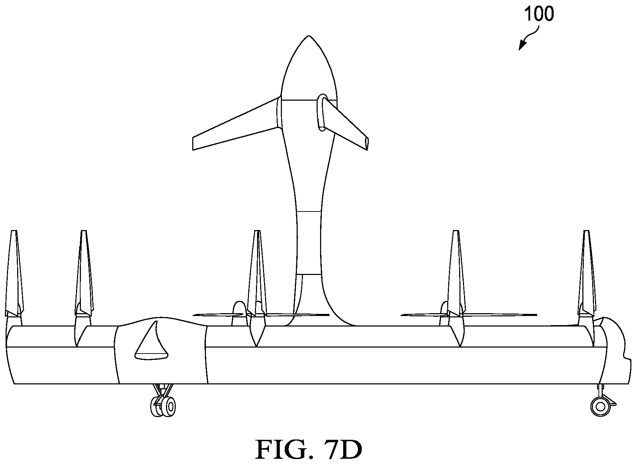

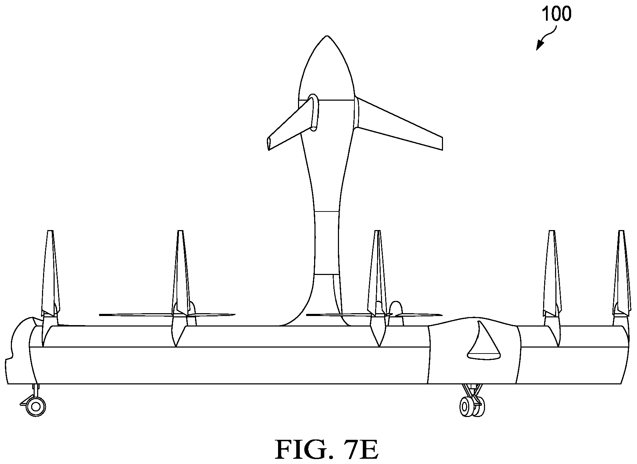

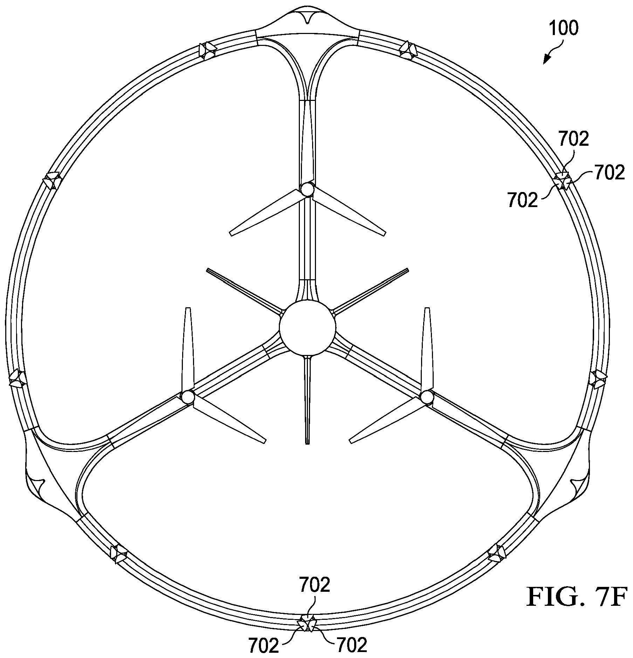

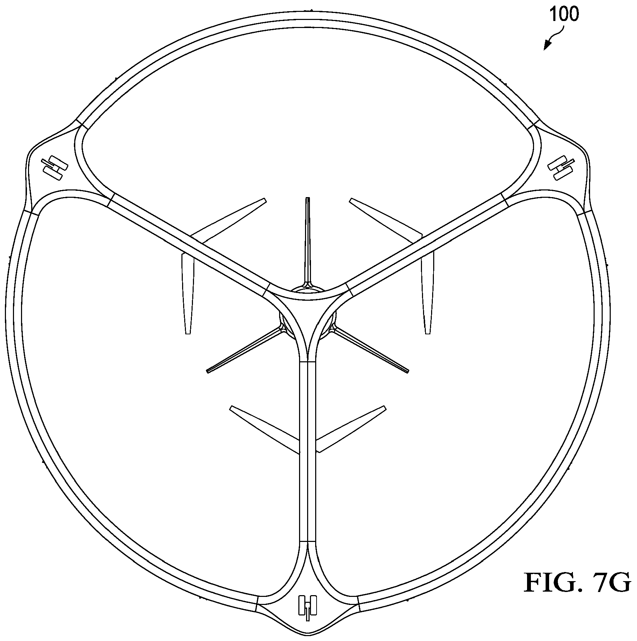

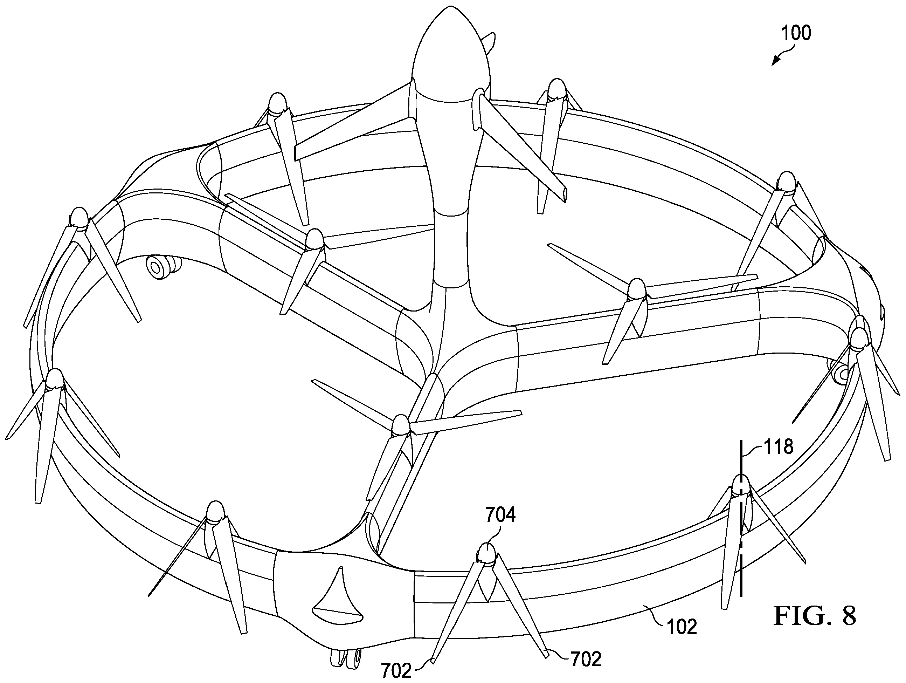

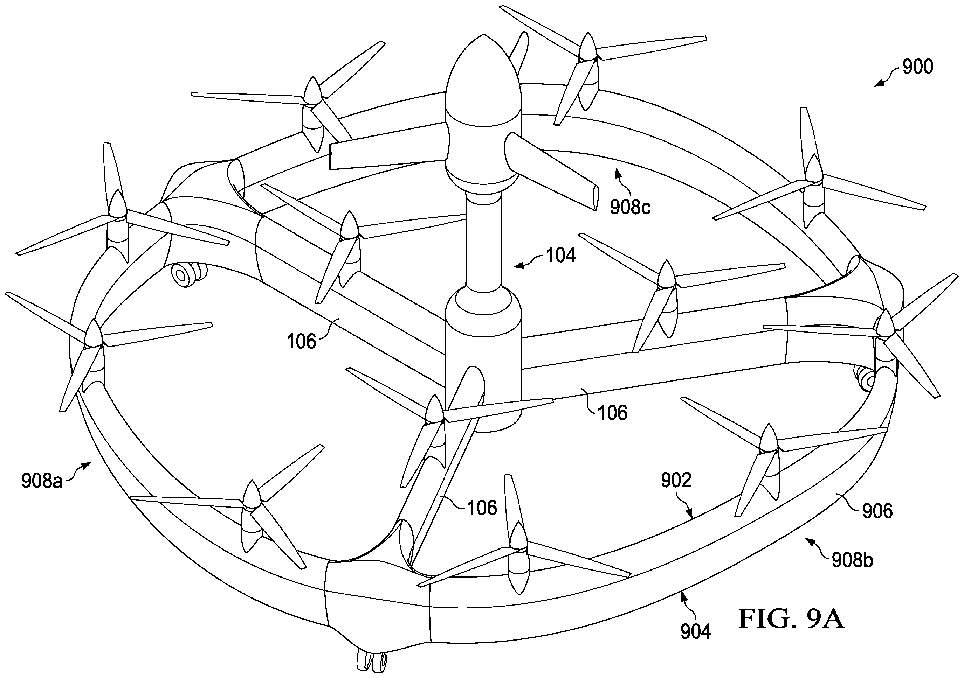

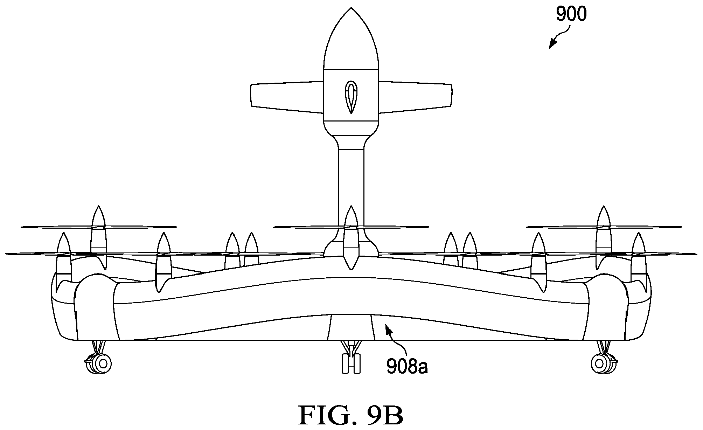

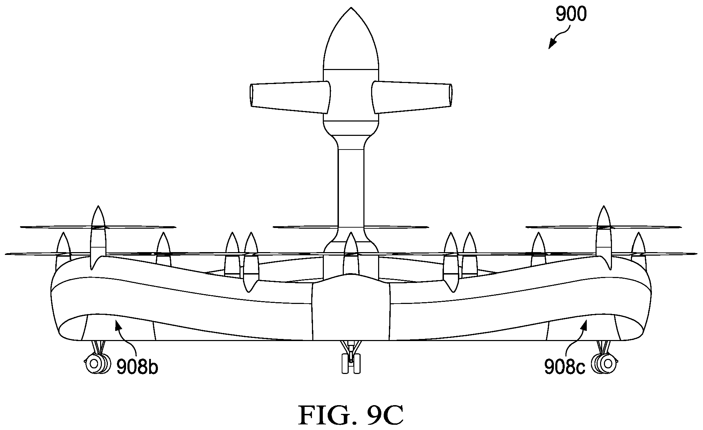

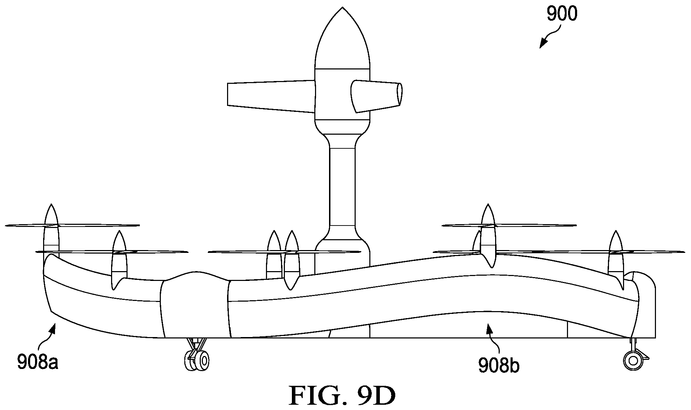

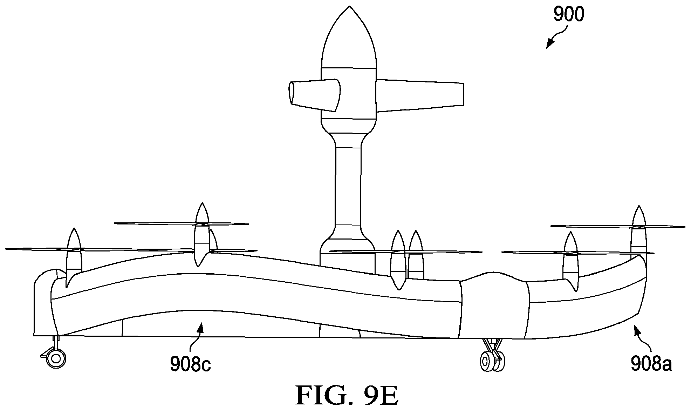

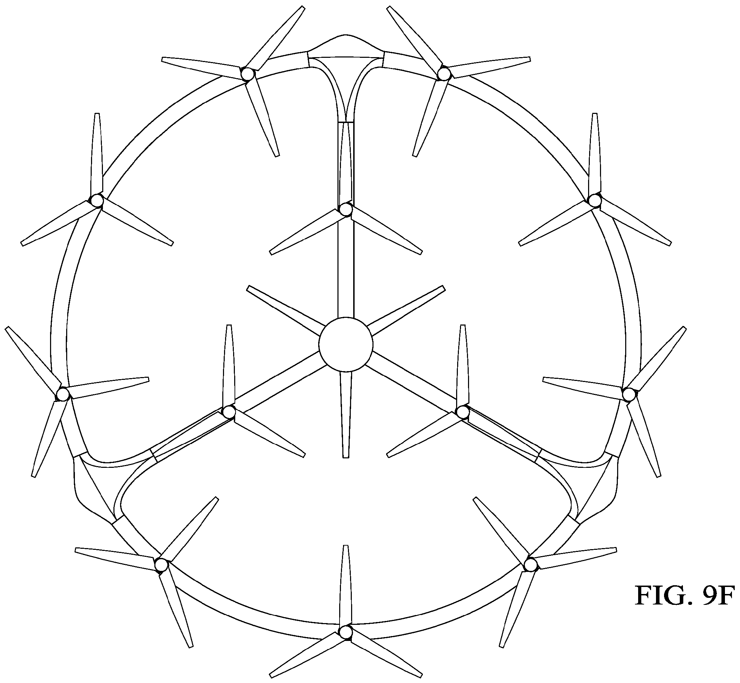

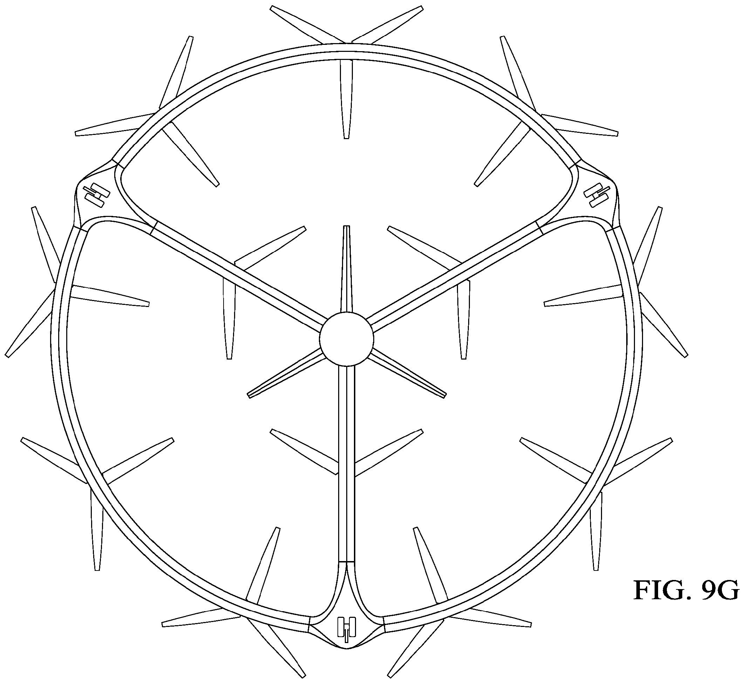

The aircraft 100 provides a stable platform for one or more sensors or surveillance packages disposed on, disposed within or attached to the closed wing 102, spokes 106 or fuselage 104. In fact, the configuration of the aircraft 100 allows the placement of the one or more sensors or surveillance packages to provide a 360 degree view. Moreover, the extension of the fuselage 104 from the engines or motors 132 provides a wide unobstructed view for the one or more sensors or surveillance packages.
As shown in FIG. 6C and FIGS. 7A-7G, the propellers 120 can be selectively folded in a forward direction. The propellers 120 could also be folded in a backward direction. In the embodiment having the forward folding propellers 700, each propeller 700 includes two or more rotor blades 702, each rotor blade 702 in mechanical communication with a hub 704 and pivotable about an axis of rotation 118. A fold linkage mechanically couples a rotating portion of a bearing plate to the rotor blade 702. An actuator is coupled to a non-rotating portion of the bearing plate and is operable to reposition the bearing plate from a first position to a second position such that the folding links pivot the rotor blades 702 from a deployed position to a folded position. The folded position can be a forward direction, which extends past the hub 704 with the first position of the bearing plate is closer to the hub 704 than the second position of the bearing plate. A tip of all the rotors 702 can be preloaded together in the forward folded position such that a vibration of the rotors 702 is minimized.
Alternatively and as shown in FIG. 8, the folded position can be a backward direction, which extends away from the hub 704, and the first position of the bearing plate is closer to the hub 304 than the second position of the bearing plate. The angle or distance that the rotors 702 can fold will depend on the relative size and shape of the closed wing with respect to the pivot point and size of the rotors. For example, FIG. 8 shows the rotors 702 folded in a backward position, but not against the surface of the closed wing 102 or substantially parallel to the rotational axis 118 of the rotors 702. Some embodiments of the present invention will have the rotors 702 resting against or close to the surface of the closed wing 102 and/or substantially parallel to the rotational axis 118 of the rotors. An example of backward folding rotor blades is disclosed in U.S. Patent No. 9,156,545.
Now referring to FIGS. 9A-9G, various views of a closed wing aircraft 900 having a sinusoidal-shaped circular wing in accordance with one embodiment of the present invention are shown. More specifically, FIG. 9A is a perspective view, FIG. 9B is a front elevation view, FIG. 9C is a rear elevation view, FIG. 9D is right side elevation view, FIG. 9E is a left side elevation view, FIG. 9F is a top plan view, and FIG. 9G is a bottom plan view. As shown, the leading edge 902 and trailing edge 904 of the closed wing 906 are sinusoidal-shaped. Instead of the circular wing being a constant height around the center fuselage 104 as previously shown, the wing rises and falls to create three sinusoidal humps 908a, 908b, 908c. The humps 908a, 908b, 908c are at their highest between the three spokes 106 and lowest where the wing 906 attaches to the spokes 106. The advantages of this configuration are as follows: 1) Additional wing ground clearance to the circular wing when landing. With the flat circular wing landing must be close to perpendicular to avoid damaging the wing or the landing gear must be made much longer. 2) Improved access to center fuselage. With the flat circular wing access to the center fuselage is restricted by the height of the wing. 3) Improved stability by moving the wing center of pressure closer to the aircrafts center of gravity. The same benefits are achieved but to a lesser degree with four sinusoidal humps and four spokes. Lesser benefits may also be achieved in an unclaimed example having two sinusoidal humps with two spokes. With more than four sinusoidal humps the benefits are negligible. Alternatively, only one of the leading edge 902 or the trailing edge 904 of the closed wing 906 is sinusoidal-shaped. Moreover, other wing shapes can be used.

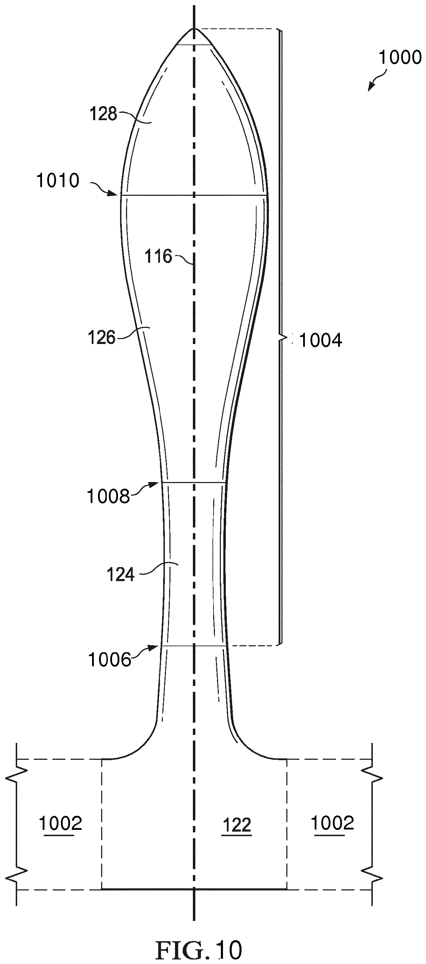

Referring now to FIG. 10, a modular fuselage 1000 for an aircraft capable of vertical takeoff and landing and stationary flight is shown in accordance with one embodiment of the present invention. The modular fuselage 1000 connects to a distributed airframe 1002. The distributed airframe can be a closed wing that is circular-shaped, oval-shaped, triangular-shaped, or polygonal-shaped. The modular fuselage 1000 has a longitudinal axis 116 substantially parallel to a rotational axis of three or more propellers. The modular fuselage 1000 includes a rear section or module 122 substantially disposed within a perimeter of the distributed airframe 1002, and a front section or module 1004 removably connected to the rear section or module 122 and substantially aligned with the longitudinal axis 116. One or more engines or motors are disposed within or attached to the distributed airframe 1002 or fuselage. The three or more propellers are proximate to a leading edge of the distributed airframe 1002, distributed along the distributed airframe 1002, and operably connected to the one or more engines or motors to provide lift whenever the aircraft is in vertical takeoff and landing and stationary flight. As previously described, the rear 122, middle 124, front 126 and nose 128 sections or modules can be individually configured to be a cockpit module, a cabin module, an escape module, a payload module, a sensor module, a surveillance module, a power source module, a fuel module, or any combination thereof. Note that the size and shape of the modular fuselage 1000 shown in the figures is for illustrative purposes and is not intended to limit the scope of the invention. In fact, the modular fuselage 1000 can be any size, shape or weight as determined by the specified flight and payload specifications for the aircraft.

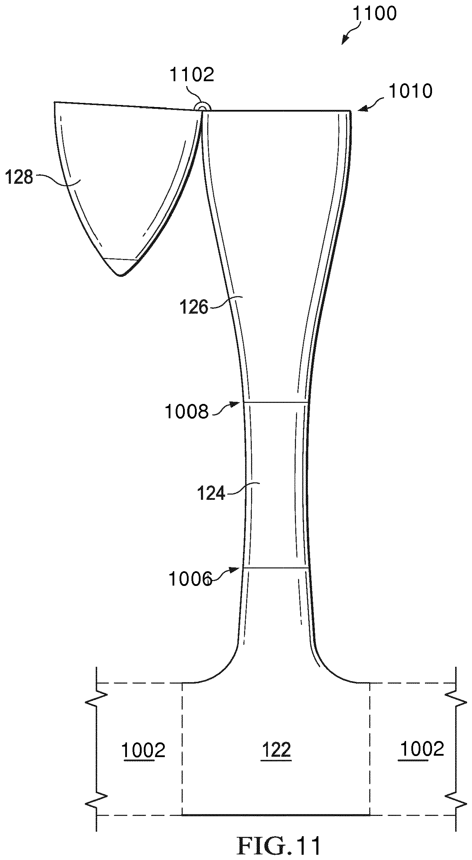

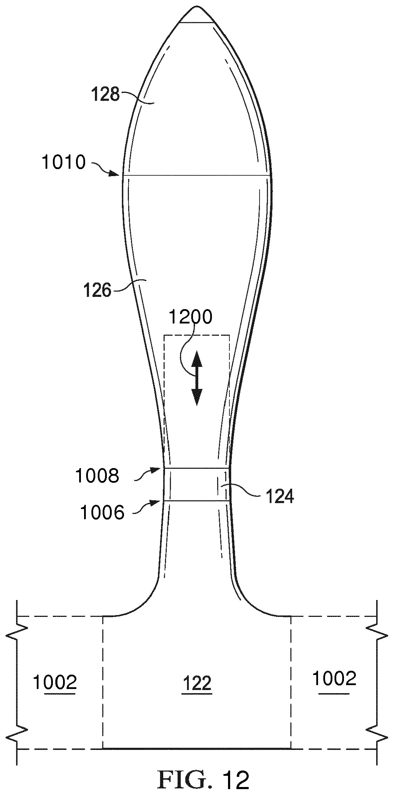

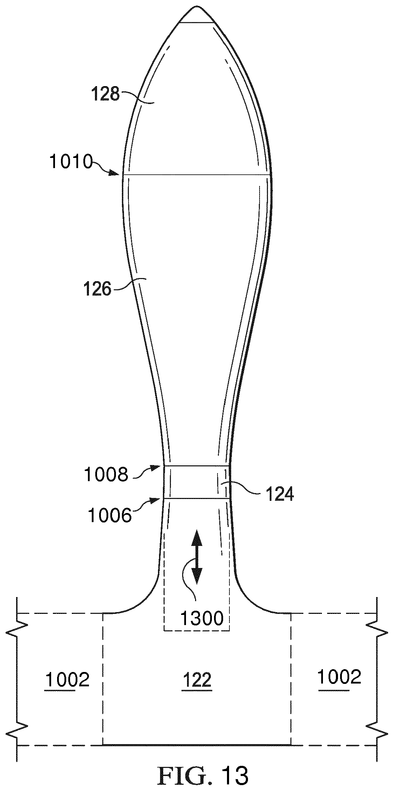

As shown, the front section or module 1004 can be disconnected and removed from the rear section or module 122 at interface 1006 using known methods. Notably, the modular fuselage 1000 may include other sections or modules. For example, a middle section or module 124 connected to the rear section or module 122, a front section or module 126 connected to the middle module 124, and a nose section or module 128 connected to the front section or module 126. Each of these sections or modules can be removable from the other sections at interfaces 1008 and 1010, respectively. Moreover, the sections or modules can pivot, or retract at least partially into an adjacent section or module for storage or transport of the aircraft. For example, FIG. 11 depicts the nose section or module 128 pivoting to an open position 1100 using a hinging mechanism 1102 at interface 1010. FIG. 12 depicts the front section or module 126 in a retracted position such that the middle section 124 releases at interface 1008 and slides partially or entirely into the front section or module 126 as indicated by arrow 1200. Similarly, FIG. 13 depicts the middle section or module 124 in a retracted position such that the middle section 124 releases at interface 1006 and slides partially or entirely into the rear section or module 122 as indicated by arrow 1300. In addition to storing and transporting the aircraft, retracting the various sections or modules as illustrated can selectively change the flight characteristics and/or center of gravity of the aircraft. In addition, moving one or more ballast within the sections or modules 122, 124, 126, 128, or transferring fuel between two or more fuel tanks disposed the sections or modules 122, 124, 126, 128 can selectively change the flight characteristics and/or center of gravity of the aircraft.

It will be understood that particular embodiments described herein are shown by way of illustration and not as limitations of the invention. The principal features of this invention can be employed in various embodiments without departing from the scope of the invention.

The use of the word "a" or "an" when used in conjunction with the term "comprising" in the claims and/or the specification may mean "one," but it is also consistent with the meaning of "one or more," "at least one," and "one or more than one." The use of the term "or" in the claims is used to mean "and/or" unless explicitly indicated to refer to alternatives only or the alternatives are mutually exclusive, although the disclosure supports a definition that refers to only alternatives and "and/or." Throughout this application, the term "about" is used to indicate that a value includes the inherent variation of error for the device, the method being employed to determine the value, or the variation that exists among the study subjects.

As used in this specification and claim(s), the words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps. In embodiments of any of the compositions and methods provided herein, "comprising" may be replaced with "consisting essentially of' or "consisting of'. As used herein, the phrase "consisting essentially of' requires the specified integer(s) or steps as well as those that do not materially affect the character or function of the claimed invention. As used herein, the term "consisting" is used to indicate the presence of the recited integer (e.g., a feature, an element, a characteristic, a property, a method/process step or a limitation) or group of integers (e.g., feature(s), element(s), characteristic(s), propertie(s), method/process steps or limitation(s)) only.

The term "or combinations thereof' as used herein refers to all permutations and combinations of the listed items preceding the term. For example, "A, B, C, or combinations thereof' is intended to include at least one of: A, B, C, AB, AC, BC, or ABC, and if order is important in a particular context, also BA, CA, CB, CBA, BCA, ACB, BAC, or CAB. Continuing with this example, expressly included are combinations that contain repeats of one or more item or term, such as BB, AAA, AB, BBC, AAABCCCC, CBBAAA, CABABB, and so forth. The skilled artisan will understand that typically there is no limit on the number of items or terms in any combination, unless otherwise apparent from the context.

As used herein, words of approximation such as, without limitation, "about", "substantial" or "substantially" refers to a condition that when so modified is understood to not necessarily be absolute or perfect but would be considered close enough to those of ordinary skill in the art to warrant designating the condition as being present. The extent to which the description may vary will depend on how great a change can be instituted and still have one of ordinary skilled in the art recognize the modified feature as still having the required characteristics and capabilities of the unmodified feature. In general, but subject to the preceding discussion, a numerical value herein that is modified by a word of approximation such as "about" may vary from the stated value by at least ±1, 2, 3, 4, 5, 6, 7, 10, 12 or 15% from the stated value.

## Claims

1. An aircraft (100) capable of vertical takeoff and landing, stationary flight and forward flight, comprising:
a closed wing (102) that provides lift whenever the aircraft (100) is in forward flight;
a fuselage (104) at least partially disposed within a perimeter of the closed wing (102); three or more spokes (106) coupling the closed wing (102) to the fuselage (104);
one or more engines or motors (132) disposed within or attached to the closed wing (102), fuselage (104) or spokes (106); and
three or more propellers (120) proximate to a leading edge (110) of the closed wing (102) or the three or more spokes (106), distributed along the closed wing (102) or the three or more spokes (106), and operably connected to the one or more engines or motors (132) to provide lift whenever the aircraft (100) is in vertical takeoff and landing and stationary flight and provide thrust whenever the aircraft (100) is in forward flight;
wherein an axis of rotation (118) of the three or more propellers is substantially parallel to the fuselage and constant during transition between forward flight and vertical flight; and
wherein the closed wing (102), the fuselage (104) and the spokes (106) are not reconfigured for transition between vertical takeoff and landing, stationary flight and forward flight.

2. The aircraft of claim 1, wherein:
the closed wing (102) is circular-shaped, oval-shaped, triangular-shaped, or polygonal-shaped; or
a leading edge (110) or trailing edge (112) or a combination thereof of the closed wing (102) are sinusoidal-shaped; or
the closed wing (102) comprises a plurality of wing segments (102a-c) connected together.

3. The aircraft of claim 1 or claim 2, wherein: the closed wing (102), the fuselage (104) and the spokes (106) are symmetrically shaped to provide transition between vertical takeoff and landing, stationary flight and forward flight in any direction.

4. The aircraft of any preceding claim, wherein the fuselage comprises:
a rear module (122) substantially disposed at a center of the closed wing (102) and having a longitudinal axis (116) substantially parallel to the rotational axis (118) of the three or more propellers (120);
a front module (126) removably connected to the rear module (122) and aligned with the longitudinal axis (116).

5. The aircraft of claim 4, wherein the aircraft comprises one or more middle modules (124) removably connected between the front module (126) and the rear module (122).

6. The aircraft of claim 4 or claim 5, wherein:
the front module (126) comprises any one of a cockpit module, a cabin module, an escape module, a payload module, a sensor module or a surveillance module.

7. The aircraft of claim 4 or claim 5, wherein the rear module (122) comprises any one of a cabin module, a payload module, a sensor module, a surveillance module, a power source module or a fuel module.

8. The aircraft of claim 5, wherein the one or more middle modules (124) comprise any one of a cabin module, an escape module, a payload module, a sensor module, a surveillance module, a power source module or a fuel module.

9. The aircraft of any of claims 4 to 8, wherein the front module (126) detaches, pivots, or retracts at least partially into the rear module (122) for storage or transport of the aircraft (100).

10. The aircraft of any preceding claim, further comprising:
one or more flight control surfaces disposed on or extending from the closed wing (102), the spokes (106) or the fuselage (104), wherein the one or more control surfaces comprise one or more air foils, winglets (134), elevators or ailerons; or
one or more sensors or surveillance packages disposed on, disposed within or attached to the closed wing (102), the spokes (106) or the fuselage (104); or
one or more doors or removable sections in the closed wing (102) that provide access to the fuselage (104) when the aircraft (100) is in a landed position; or
three or more landing gears, pads or skids operably attached to the closed wing.

11. The aircraft of any preceding claim, wherein either:
(i) the one or more airfoils or winglets (134) are retractable, removable, stowable or variable swept; or
(ii) the three or more landing gears, pads or skids (130) are retractable.

12. The aircraft of any preceding claim, wherein the one or more engines or motors (132) comprise:
a plurality of hydraulic motors (132) disposed within or attached to the closed wing (102), fuselage (104) or spokes (106) in a distributed configuration;
a source of hydraulic or electric power disposed within or attached to the closed wing (102), fuselage (104) or spokes (106) and coupled to each of the plurality of hydraulic
motors (132) disposed within or attached to the closed wing (102), fuselage (104) or spokes (106), wherein the source of hydraulic or electric power provides sufficient energy density for the aircraft (100) to attain and maintain operations of the aircraft (100);
a controller (214a-f) coupled to each of the hydraulic motors (132); and
one or more processors communicably coupled to each controller that control an operation and speed of the plurality of hydraulic motors.

13. The aircraft of claim 12, wherein the source of hydraulic or electric power is one or more batteries (402), a piston engine, or a turboshaft engine (206).

14. The aircraft of claim 12 or claim 13, wherein:
the hydraulic motors are defined further as a variable displacement hydraulic motor (216), wherein a speed and a torque are controlled by changing a displacement of the variable displacement hydraulic motor (216); or
the hydraulic motors (132) are self-cooling.

15. The aircraft of any one of claims 12 to 14, wherein:
the source of hydraulic or electric power comprises a turboshaft engine (206) or an internal combustion engine (302), and a variable displacement hydraulic pump (210) connected between the turboshaft engine (206) or the internal combustion engine (302) and the plurality of hydraulic motors (132); or
the source of hydraulic or electric power comprises one or more batteries (402), and a variable displacement hydraulic motor pump (210) or a piezo-hydraulic pump (408) connected between the one or more batteries (402) and the plurality of hydraulic motors (132).

16. The aircraft of any preceding claim, wherein the three or more propellers (120) are variable speed constant pitch propeller.

17. The aircraft of any preceding claim, wherein each propeller (120, 700) comprises:
two or more rotor blades (702), each rotor blade (702) in mechanical communication with a hub (704) and pivotable about an axis of rotation (118);
a bearing plate comprising a rotating portion and a non-rotating portion;
a fold linkage coupled to the rotating portion of the bearing plate and in mechanical communication with the rotor blade (702); and
an actuator coupled to the non-rotating portion of the bearing plate and operable to reposition the bearing plate from a first position to a second position such that the folding links pivot the rotor blades (702) from a deployed position to a folded position.

18. The aircraft of claim 17, wherein:
the folded position comprises a forward direction extending past the hub (704), and the first position of the bearing plate is closer to the hub (704) than the second position of the bearing plate; or
the folded position comprises a backward direction extending away from the hub (704), and the first position of the bearing plate is closer to the hub (704) than the second position of the bearing plate.

19. The aircraft of claim 17 or claim 18, wherein the tip of all the rotors are preloaded together in the forward folded position such that a vibration of the rotors is minimized.

20. The aircraft of any preceding claim, wherein the three or more propellers (120) are selectively feathered or operated in a low power mode.

21. The aircraft of any preceding claim, consisting of :
three spokes (106) and
nine propellers (120) disposed proximate to the closed wing (102), and one propeller (120) disposed proximate to each spoke (106).

22. The aircraft of any of claims 4 to 8, further comprising:
one or more ballast disposed within the front module (126) or the rear module (122) that selectively change a center of gravity of the aircraft (100) by moving the one or more ballast within the fuselage (104); and/or
two or more fuel tanks disposed within the front module (126) or the rear module (122) that selectively change a center of gravity of the aircraft (100) by transferring a fuel between the two or more fuel tanks; and/or,
wherein a size or weight of the front module (126) is selected to provide a specified center of gravity for the aircraft (100).

## Patentansprüche

1. Flugzeug (100), das zu vertikalem Starten und Landen, stationärem Flug und Vorwärtsflug in der Lage ist, umfassend:
einen geschlossenen Flügel (102), der Auftrieb bereitstellt, wann immer sich das Flugzeug (100) im Vorwärtsflug befindet;
einen Rumpf (104), der mindestens teilweise innerhalb eines Umfangs des geschlossenen Flügels (102) angeordnet ist; drei oder mehr Speichen (106), die den geschlossenen Flügel (102) mit dem Rumpf (104) koppeln;
ein oder mehrere Triebwerke oder Motoren (132), die innerhalb des geschlossenen Flügels (102), des Rumpfs (104) oder der Speichen (106) angeordnet sind oder daran angebracht sind; und
drei oder mehr Propeller (120) nahe an einer Vorderkante (110) des geschlossenen Flügels (102) oder zu den drei oder mehr Speichen (106), verteilt entlang des geschlossenen Flügels (102) oder der drei oder mehr Speichen (106) und betriebsverbunden mit dem einen oder den mehreren Triebwerken oder Motoren (132), um Auftrieb bereitzustellen, wann immer sich das Flugzeug (100) im vertikalen Starten und Landen und stationären Flug befindet, und Schub bereitzustellen, wann immer sich das Flugzeug (100) im Vorwärtsflug befindet;
wobei eine Rotationsachse (118) der drei oder mehr Propeller im Wesentlichen parallel zu dem Rumpf und während Übergang zwischen Vorwärtsflug und Vertikalflug konstant ist; und
wobei der geschlossene Flügel (102), der Rumpf (104) und die Speichen (106) nicht zum Übergang zwischen vertikalem Starten und Landen, stationärem Flug und Vorwärtsflug umkonfiguriert werden.

2. Flugzeug nach Anspruch 1, wobei:
der geschlossene Flügel (102) kreisförmig, oval, dreiecksförmig oder polygonförmig ist; oder
eine Vorderkante (110) oder Hinterkante (112) oder eine Kombination davon des geschlossenen Flügels (102) sinusförmig sind; oder
der geschlossene Flügel (102) eine Vielzahl von Flügelsegmenten (102a-c) umfasst, die miteinander verbunden sind.

3. Flugzeug nach Anspruch 1 oder Anspruch 2, wobei: der geschlossene Flügel (102), der Rumpf (104) und die Speichen (106) symmetrisch geformt sind, um Übergang zwischen vertikalem Starten und Landen, stationärem Flug und Vorwärtsflug in jede Richtung bereitzustellen.

4. Flugzeug nach einem der vorstehenden Ansprüche, wobei der Rumpf umfasst:
ein Heckmodul (122), das im Wesentlichen an einem Zentrum des geschlossenen Flügels (102) angeordnet ist und eine Längsachse (116) im Wesentlichen parallel zu der Rotationsachse (118) der drei oder mehr Propeller (120) aufweist;
ein Frontmodul (126), das mit dem Heckmodul (122) abnehmbar verbunden und mit der Längsachse (116) ausgerichtet ist.

5. Flugzeug nach Anspruch 4, wobei das Flugzeug ein oder mehrere Mittenmodule (124) umfasst, die zwischen dem Frontmodul (126) und dem Heckmodul (122) abnehmbar verbunden sind.

6. Flugzeug nach Anspruch 4 oder Anspruch 5, wobei:
das Frontmodul (126) jegliches von einem Cockpitmodul, einem Kabinenmodul, einem Fluchtmodul, einem Nutzlastmodul, einem Sensormodul oder einem Überwachungsmodul umfasst.

7. Flugzeug nach Anspruch 4 oder Anspruch 5, wobei das Heckmodul (122) jegliches von einem Kabinenmodul, einem Nutzlastmodul, einem Sensormodul, einem Überwachungsmodul, einem Leistungsquellenmodul oder einem Treibstoffmodul umfasst.

8. Flugzeug nach Anspruch 5, wobei das eine oder die mehreren Mittenmodule (124) jegliches von einem Kabinenmodul, einem Fluchtmodul, einem Nutzlastmodul, einem Sensormodul, einem Überwachungsmodul, einem Leistungsquellenmodul oder einem Treibstoffmodul umfassen.

9. Flugzeug nach einem der Ansprüche 4 bis 8, wobei sich das Frontmodul (126) zur Lagerung oder zum Transport des Flugzeugs (100) löst, schwenkt oder mindestens teilweise in das Heckmodul (122) hinein zurückzieht.

10. Flugzeug nach einem der vorstehenden Ansprüche, weiter umfassend:
eine oder mehrere Flugsteueroberflächen, die auf dem geschlossenen Flügel (102), den Speichen (106) oder dem Rumpf (104) angeordnet sind oder sich von diesen erstrecken, wobei die eine oder die mehreren Steueroberflächen eine oder mehrere Tragflächen, Winglets (134), Höhenruder oder Querruder umfassen; oder
einen oder mehrere Sensoren oder Überwachungspakete, die angeordnet sind auf, angeordnet sind innerhalb oder angebracht sind an dem geschlossenen Flügel (102), den Speichen (106) oder dem Rumpf (104); oder
eine oder mehrere Türen oder abnehmbare Sektionen in dem geschlossenen Flügel (102), die Zugriff auf den Rumpf (104) bereitstellen, wenn sich das Flugzeug (100) in einer gelandeten Position befindet; oder
drei oder mehr Landefahrgestelle, -pads oder -gleiter, die an dem geschlossenen Flügel betriebsangebracht sind.

11. Flugzeug nach einem der vorstehenden Ansprüche, wobei entweder:
(i) die eine oder die mehreren Tragflächen oder Winglets (134) einziehbar, abnehmbar, verstaubar oder variabel gekippt sind; oder
(ii) die drei oder mehr Landefahrgestelle, -pads oder -gleiter (130) einziehbar sind.

12. Flugzeug nach einem der vorstehenden Ansprüche, wobei das eine oder die mehreren Triebwerke oder Motoren (132) umfassen:
eine Vielzahl von Hydraulikmotoren (132), die in einer verteilten Konfiguration innerhalb des geschlossenen Flügels (102), des Rumpfs (104) oder der Speichen (106) angeordnet oder daran angebracht sind;
eine Quelle von hydraulischer oder elektrischer Leistung, die innerhalb des geschlossenen Flügels (102), des Rumpfs (104) oder der Speichen (106) angeordnet oder daran angebracht ist und die mit jedem aus der Vielzahl von Hydraulikmotoren (132), die innerhalb des geschlossenen Flügels (102), des Rumpfs (104) oder der Speichen (106) angeordnet oder daran angebracht sind, gekoppelt ist, wobei die Quelle von hydraulischer oder elektrischer Leistung ausreichend Energiedichte für das Flugzeug (100) bereitstellt, um Betriebe des Flugzeugs (100) zu erreichen und beizubehalten;
eine Steuerung (214a-f), die mit jedem der Hydraulikmotoren (132) gekoppelt ist; und
einen oder mehrere Prozessoren, die mit jeder Steuerung kommunikationsfähig gekoppelt sind, die einen Betrieb und eine Geschwindigkeit der Vielzahl von Hydraulikmotoren steuern.

13. Flugzeug nach Anspruch 12, wobei die Quelle von hydraulischer oder elektrischer Leistung eine oder mehrere Batterien (402), ein Kolbentriebwerk oder ein Turbowellentriebwerk (206) ist.

14. Flugzeug nach Anspruch 12 oder Anspruch 13, wobei:
die Hydraulikmotoren weiter als Hydraulikmotor (216) mit variabler Verdrängung definiert sind, wobei eine Geschwindigkeit und ein Drehmoment durch Verändern einer Verdrängung des Hydraulikmotors (216) mit variabler Verdrängung gesteuert werden; oder
die Hydraulikmotoren (132) selbstkühlend sind.

15. Flugzeug nach einem der Ansprüche 12 bis 14, wobei:
die Quelle von hydraulischer oder elektrischer Leistung ein Turbowellentriebwerk (206) oder ein internes Verbrennungstriebwerk (302), sowie eine Hydraulikpumpe (210) mit variabler Verdrängung, die zwischen dem Turbowellentriebwerk (206) oder dem internen Verbrennungstriebwerk (302) und der Vielzahl von Hydraulikmotoren (132) verbunden ist, umfasst; oder
die Quelle von hydraulischer oder elektrischer Leistung eine oder mehrere Batterien (402) und eine Hydraulikmotorpumpe (210) mit variabler Verdrängung oder eine piezohydraulische Pumpe (408), die zwischen der einen oder den mehreren Batterien (402) und der Vielzahl von Hydraulikmotoren (132) verbunden ist, umfasst.

16. Flugzeug nach einem der vorstehenden Ansprüche, wobei die drei oder mehr Propeller (120) Propeller mit variabler Geschwindigkeit und konstantem Anstellwinkel sind.

17. Flugzeug nach einem der vorstehenden Ansprüche, wobei jeder Propeller (120, 700) umfasst:
zwei oder mehr Rotorblätter (702), wobei jedes Rotorblatt (702) in mechanischer Kommunikation mit einer Nabe (704) steht und um eine Rotationsachse (118) schwenkbar ist;
eine Lagerplatte, die einen rotierenden Abschnitt und einen nicht-rotierenden Abschnitt umfasst;
eine Faltverknüpfung, die mit dem rotierenden Abschnitt der Lagerplatte gekoppelt ist und in mechanischer Kommunikation mit dem Rotorblatt (702) steht; und
einen Betätiger, der mit dem nicht-rotierenden Abschnitt der Lagerplatte gekoppelt ist und dafür betreibbar ist, die Lagerplatte von einer ersten Position zu einer zweiten Position umzupositionieren, sodass die Faltverknüpfungen die Rotorblätter (702) von einer formierten Position zu einer gefalteten Position schwenken.

18. Flugzeug nach Anspruch 17, wobei:
die gefaltete Position eine Vorwärtsrichtung umfasst, die sich über die Nabe (704) hinaus erstreckt, und die erste Position der Lagerplatte näher an der Nabe (704) als die zweite Position der Lagerplatte ist; oder
die gefaltete Position eine Rückwärtsrichtung umfasst, die sich von der Nabe (704) wegerstreckt, wobei die erste Position der Lagerplatte näher an der Nabe (704) als die zweite Position der Lagerplatte ist.

19. Flugzeug nach Anspruch 17 oder Anspruch 18, wobei die Spitzen von allen der Rotoren zusammen in die nach vorne gefalteten Position vorgespannt sind, sodass eine Vibration der Rotoren minimiert ist.

20. Flugzeug nach einem der vorstehenden Ansprüche, wobei die drei oder mehr Propeller (120) selektiv in Segelstellung gebracht werden oder in einem Modus mit niedriger Leistung betrieben werden.

21. Flugzeug nach einem der vorstehenden Ansprüche, bestehend aus drei Speichen (106) und neun Propellern (120), die nahe an dem geschlossenen Flügel (102) angeordnet sind, und einem Propeller (120), der nahe an jeder Speiche (106) angebracht ist.

22. Flugzeug nach einem der Ansprüche 4 bis 8, weiter umfassend:
ein oder mehrere Ballastelemente innerhalb des Frontmoduls (126) oder des Heckmoduls (122), die selektiv einen Schwerpunkt des Flugzeugs (100) durch Bewegen des einen oder der mehreren Ballastelemente innerhalb des Rumpfs (104) verändern; und/oder
zwei oder mehr Treibstofftanks, die innerhalb des Frontmoduls (126) oder des Heckmoduls (122) angeordnet sind, die selektiv einen Schwerpunkt des Flugzeugs (100) durch Übertragen eines Treibstoffs zwischen den zwei oder mehr Treibstofftanks verändern; und/oder
wobei eine Größe oder ein Gewicht des Frontmoduls (126) ausgewählt ist, um einen spezifischen Schwerpunkt für das Flugzeug (100) bereitzustellen.

## Revendications

1. Aéronef (100) capable d'un décollage et d'un atterrissage à la verticale, d'un vol stationnaire et d'un vol vers l'avant, comprenant :
une voilure fermée (102) qui fournit de la portance lorsque l'aéronef (100) est en vol vers l'avant ;
un fuselage (104) disposé au moins partiellement dans un périmètre de l'aile fermée (102) ;
trois rayons (106) ou plus accouplant la voilure fermée (102) au fuselage (104) ;
un ou plusieurs moteurs thermiques ou moteurs (132) disposés dans ou attachés à la voilure fermée (102), au fuselage (104) ou aux rayons (106) ; et
trois hélices (120) ou plus à proximité d'un bord d'attaque (110) de la voilure fermée (102) ou des trois rayons (106) ou plus, réparties le long de la voilure fermée (102) ou des trois rayons (106) ou plus, et fonctionnellement reliées aux un ou plusieurs moteurs thermiques ou moteurs (132) pour fournir de la portance lorsque l'aéronef (100) est en décollage et atterrissage à la verticale et en vol stationnaire et fournir de la poussée lorsque l'aéronef (100) est en vol vers l'avant ;
dans lequel un axe de rotation (118) des trois hélices ou plus est sensiblement parallèle au fuselage et constant durant la transition entre vol vers l'avant et vol vertical ; et
dans lequel la voilure fermée (102), le fuselage (104) et les rayons (106) ne sont pas reconfigurés pour une transition entre décollage et atterrissage à la verticale, vol stationnaire et vol vers l'avant.

2. Aéronef selon la revendication 1, dans lequel :
la voilure fermée (102) est de forme circulaire, de forme ovale, de forme triangulaire ou de forme polygonale ; ou
un bord d'attaque (110) ou bord de fuite (112) ou une combinaison de ceux-ci de la voilure fermée (102) sont de forme sinusoïdale ; ou
la voilure fermée (102) comprend une pluralité de segments de voilure (102a-c) reliés ensemble.

3. Aéronef selon la revendication 1 ou la revendication 2, dans lequel : la voilure fermée (102), le fuselage (104) et les rayons (106) sont de forme symétrique pour fournir une transition entre décollage et atterrissage à la verticale, vol stationnaire et vol vers l'avant dans toute direction.

4. Aéronef selon l'une quelconque des revendications précédentes, dans lequel le fuselage comprend :
un module arrière (122) sensiblement disposé au niveau d'un centre de la voilure fermée (102) et ayant un axe longitudinal (116) sensiblement parallèle à l'axe de rotation (118) des trois hélices (120) ou plus ;
un module avant (126) relié de manière amovible au module arrière (122) et aligné avec l'axe longitudinal (116).

5. Aéronef selon la revendication 4, dans lequel l'aéronef comprend un ou plusieurs modules centraux (124) reliés de manière amovible entre le module avant (126) et le module arrière (122).

6. Aéronef selon la revendication 4 ou la revendication 5, dans lequel :
le module avant (126) comprend l'un quelconque d'un module de cockpit, d'un module de cabine, d'un module d'évacuation, d'un module de charge utile, d'un module de capteur ou d'un module de surveillance.

7. Aéronef selon la revendication 4 ou la revendication 5, dans lequel le module arrière (122) comprend l'un quelconque d'un module de cabine, d'un module de charge utile, d'un module de capteur, d'un module de surveillance, d'un module de source d'alimentation ou d'un module de carburant.

8. Aéronef selon la revendication 5, dans lequel les un ou plusieurs modules centraux (124) comprennent l'un quelconque d'un module de cabine, d'un module d'évacuation, d'un module de charge utile, d'un module de capteur, d'un module de surveillance, d'un module de source d'alimentation ou d'un module de carburant.

9. Aéronef selon l'une quelconque des revendications 4 à 8, dans lequel le module avant (126) se détache, pivote ou se rétracte au moins partiellement dans le module arrière (122) pour stockage ou transport de l'aéronef (100).

10. Aéronef selon l'une quelconque des revendications précédentes, comprenant en outre :
une ou plusieurs surfaces de commande vol disposées sur ou s'étendant depuis la voilure fermée (102), les rayons (106) ou le fuselage (104), dans lequel les une ou plusieurs surfaces de commande comprennent un ou plusieurs profils aérodynamiques, ailettes de bout d'aile (134), gouvernes de profondeur ou ailerons ; ou
un ou plusieurs capteurs ou boîtiers de surveillance disposés sur, disposés dans ou attachés à la voilure fermée (102), aux rayons (106) ou au fuselage (104) ; ou
une ou plusieurs portes ou sections amovibles dans la voilure fermée (102) qui donnent accès au fuselage (104) lorsque l'aéronef (100) est dans une position atterrie ; ou
trois trains, plateformes ou patins d'atterrissage ou plus fonctionnellement attachés à la voilure fermée.

11. Aéronef selon l'une quelconque des revendications précédentes, dans lequel soit :
(i) les un ou plusieurs profils aérodynamiques ou ailettes de bout d'aile (134) sont rétractables, amovibles, escamotables ou à balayage variable ; ou
(ii) les trois trains, plateformes ou patins d'atterrissage (130) ou plus sont rétractables.

12. Aéronef selon l'une quelconque des revendications précédentes, dans lequel les uns ou plusieurs moteurs thermiques ou moteurs (132) comprennent :
une pluralité de moteurs hydrauliques (132) disposés dans ou attachés à la voilure fermée (102), au fuselage (104) ou aux rayons (106) dans une configuration distribuée ;
une source de puissance hydraulique ou électrique disposée dans ou attachée à la voilure fermée (102), au fuselage (104) ou aux rayons (106) et accouplée à chacun de la pluralité de moteurs hydrauliques (132) disposés dans ou attachés à la voilure fermée (102), au fuselage (104) ou aux rayons (106), dans lequel la source de puissance hydraulique ou électrique fournit une densité d'énergie suffisante pour l'aéronef (100) pour atteindre et maintenir des opérations de l'aéronef (100) ;
un dispositif de commande (214a-f) accouplé à chacun des moteurs hydrauliques (132) ; et
un ou plusieurs processeurs accouplés en communication à chaque dispositif de commande qui commandent une opération et la vitesse de la pluralité de moteurs hydrauliques.

13. Aéronef selon la revendication 12, dans lequel la source de puissance hydraulique ou électrique est une ou plusieurs batteries (402), un moteur thermique à pistons, ou un turbomoteur (206).

14. Aéronef selon la revendication 12 ou la revendication 13, dans lequel :
les moteurs hydrauliques sont définis en outre comme un moteur hydraulique à déplacement variable (216), dans lequel une vitesse et un couple sont commandés en changeant un déplacement du moteur hydraulique à déplacement variable (216) ; ou
les moteurs hydrauliques (132) sont à auto-refroidissement.

15. Aéronef selon l'une quelconque des revendications 12 à 14, dans lequel :
la source de puissance hydraulique ou électrique comprend un turbomoteur (206) ou un moteur à combustion interne (302), et une pompe hydraulique à déplacement variable (210) reliée entre le turbomoteur (206) ou le moteur à combustion interne (302) et la pluralité de moteurs hydrauliques (132) ; ou
la source de puissance hydraulique ou électrique comprend une ou plusieurs batteries (402), et une pompe de moteur hydraulique à déplacement variable (210) ou une pompe piézoélectrique (408) reliée entre les unes ou plusieurs batteries (402) et la pluralité de moteurs hydrauliques (132).

16. Aéronef selon l'une quelconque des revendications précédentes, dans lequel les trois hélices (120) ou plus sont des hélices à pas constant à vitesse variable.

17. Aéronef selon l'une quelconque des revendications précédentes, dans lequel chaque hélice (120, 700) comprend :
deux aubes de rotor (702) ou plus, chaque aube de rotor (702) en communication mécanique avec un moyeu (704) et pouvant pivoter autour d'un axe de rotation (118) ;
une plaque de support comprenant une partie rotative et une partie non rotative ;
une liaison de pliage accouplée à la partie rotative de la plaque de support et en communication mécanique avec l'aube de rotor (702) ; et
un actionneur accouplé à la partie non rotative de la plaque de support et servant à repositionner la plaque de support d'une première position à une seconde position de telle sorte que les maillons pliants font pivoter les aubes de rotor (702) d'une position déployée à une position pliée.

18. Aéronef selon la revendication 17, dans lequel :
la position pliée comprend une direction vers l'avant s'étendant au-delà du moyeu (704), et la première position de la plaque de support est plus proche du moyeu (704) que la seconde position de la plaque de support ; ou
la position pliée comprend une direction vers l'arrière s'étendant loin du moyeu (704), et la première position de la plaque de support est plus proche du moyeu (704) que la seconde position de la plaque de support.

19. Aéronef selon la revendication 17 ou la revendication 18, dans lequel la pointe de tous les rotors sont préchargés ensemble dans la position pliée vers l'avant de telle sorte qu'une vibration des rotors est minimisée.

20. Aéronef selon l'une quelconque des revendications précédentes, dans lequel les trois hélices (120) ou plus sont sélectivement mises en drapeau ou actionnées dans un mode faible puissance.

21. Aéronef selon l'une quelconque des revendications précédentes, constitué de :
trois rayons (106) et neuf hélices (120) disposées à proximité de la voilure fermée (102), et une hélice (120) disposée à proximité de chaque rayon (106).

22. Aéronef selon l'une quelconque des revendications 4 à 8, comprenant en outre :
un ou plusieurs ballasts disposés dans le module avant (126) ou le module arrière (122) qui changent sélectivement un centre de gravité de l'aéronef (100) en déplaçant les un ou plusieurs ballasts dans le fuselage (104) ; et/ou
deux réservoirs de carburant ou plus disposés dans le module avant (126) ou le module arrière (122) qui changent sélectivement un centre de gravité de l'aéronef (100) en transférant un carburant entre les deux réservoirs de carburant ou plus ; et/ou,
dans lequel une taille ou un poids du module avant (126) est sélectionné pour fournir un centre de gravité spécifié pour l'aéronef (100).
